# EUROPEAN PATENT APPLICATION

(11) **EP 4 489 473 A1**
(43) Date of publication of application: **08.01.2025**
(21) Application number: 23777826.1
(22) Date of filing: 14.03.2023
(51) Int. Cl.: H04W 28/06

(54) **DATA PACKET PROCESSING METHOD AND APPARATUS**

(30) Priority: 30.03.2022 CN 202210326047
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Gill Jennings & Every LLP
(86) International application number: PCT/CN2023/081343
(87) International publication number: WO 2023/185450

(57) **Abstract**

This application provides a data packet processing method and an apparatus. The method includes: A first device determines a first HARQ process from an available HARQ process range of a first DRB or a first logical channel; obtains a first data packet corresponding to the first DRB or the first logical channel, where the first data packet does not carry a logical channel identifier, so that overheads of the data packet can be reduced; and sends the first data packet to a second device through the first HARQ process. The second device determines the available HARQ process range, receives the first data packet from the first device through the first HARQ process, and can quickly and accurately determine, based on the first HARQ process for receiving the first data packet, a logical channel identifier corresponding to the first data packet.

## Description

This application claims priority to Chinese Patent Application No. 202210326047.1, filed with the China National Intellectual Property Administration on March 30, 2022 and entitled "DATA PACKET PROCESSING METHOD AND APPARATUS", which is incorporated herein by reference in its entirety.

### TECHNICAL FIELD

This application relates to the field of communication technologies, and in particular, to a data packet processing method and an apparatus.

### BACKGROUND

In a mobile communication system, a plurality of protocol layers are defined in a communication protocol. One data packet is processed by a transmit end at the protocol layers in sequence, and finally sent to a receive end. The receive end performs inverse processing at the protocol layers to obtain the original data packet. The transmit end may add some headers in a process of processing the data packet, to implement functions of the protocol layers. For example, in a 5^{th} generation (5^{th} generation, 5G) communication system, a protocol stack of a Uu interface includes the following protocol layers: a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. A header of each protocol layer is added in a process of processing a data packet.

Because the header of each protocol layer of the Uu interface is added in the process of processing the data packet, a size of the data packet sent by the transmit end becomes large. Consequently, in some scenarios, the receive end may fail to correctly receive the data packet, affecting cell coverage. For example, in a non-terrestrial network (non-terrestrial network, NTN), in some cell edge areas, because the size of the data packet becomes large, user equipment (user equipment, UE) may fail to correctly receive the data packet, affecting coverage of the NTN.

### SUMMARY

Embodiments of this application provide a data packet processing method and an apparatus, to reduce header overheads of a data packet in a Uu interface transmission process, and improve network coverage.

According to a first aspect, this application provides a data packet processing method. The method may be performed by a second device or a module in the second device. The method includes: determining an available hybrid automatic repeat request (hybrid automatic repeat request, HARQ) process range of a first data radio bearer (data radio bearer, DRB) or a first logical channel; receiving, from a first device through a first HARQ process, a first data packet corresponding to the first DRB or the first logical channel, where the first HARQ process belongs to the available HARQ process range; and determining, based on the first HARQ process, a logical channel identifier corresponding to the first data packet.

It can be learned that, when the first data packet does not carry the logical channel identifier, the second device may quickly and accurately determine, based on the HARQ process for receiving the first data packet, the logical channel identifier corresponding to the first data packet.

In a possible implementation, that the first data packet does not carry the logical channel identifier may be that a first MAC packet does not carry the logical identifier, where the first data packet is the first MAC packet. The first MAC packet does not carry the logical channel identifier, so that overheads of the MAC packet can be reduced.

In a possible implementation, when the first MAC packet does not carry a length (length, L) field, the L field directly indicates a size of the first MAC packet. The second device may determine the size of the first MAC packet based on downlink control information including length indication information, to further reduce overheads of the MAC packet.

Alternatively, the second device determines a size of the first MAC packet based on a maximum amount of information that can be carried in a preconfigured scheduling resource, where the maximum amount of information that can be carried in the preconfigured scheduling resource is the same as the size of the first MAC packet, so that overheads of the MAC packet are further reduced.

Alternatively, the second device determines a size of the first MAC packet based on relative length indication information included in the first MAC packet, where the relative length indication information indicates an offset value of the size of the first MAC packet relative to a length threshold. Compared with the L field, the relative length indication information occupies fewer overheads, to reduce overheads of the MAC packet.

In a possible implementation, the second device processes the first MAC packet to obtain a first PDCP packet, where the first PDCP packet includes data amount indication information, indicating a size of data in the first PDCP packet. Further, the second device may determine a data amount in the first PDCP packet based on the data amount indication information, to learn of the size of the data. The first PDCP packet includes the data amount indication information. In this case, the first MAC packet may not carry a length (length, L) field. The L field directly indicates a size of the first MAC packet, to further reduce overheads of the MAC packet.

Optionally, to reduce overheads occupied by the data amount indication information, the data amount indication information indicates an offset value of the size of the data in the first PDCP packet relative to a length threshold, so that the second device can determine the data amount in the first PDCP packet based on the data amount indication information and the length threshold.

Further, if in addition to the data, the first PDCP packet further has other content, for example, a padding bit, the second device may determine the padding bit in the first PDCP packet based on the data amount indication information, and may further discard the padding bit, to avoid processing the padding bit.

In a possible implementation, a first PDCP packet corresponding to the first data packet does not include a sequence number of the first PDCP packet, so that overheads of the PDCP packet can be reduced. The first PDCP packet corresponding to the first data packet may be a first PDCP packet obtained by processing the first MAC packet by the second device.

In a possible implementation, the second device may determine, based on the first HARQ process according to a mapping rule, a sequence number of a first PDCP packet corresponding to the first data packet, so that when the first PDCP packet does not include the sequence number of the first PDCP packet, the sequence number of the first PDCP packet can be determined.

The mapping rule includes: sequence number of the first PDCP packet=initial sequence number+(sequence number of the first HARQ process in the available HARQ process range of the first DRB or the first logical channel-1)*MAC packet that corresponds to the first DRB or the first logical channel and that is received from the first HARQ process for an M^{th} time, where the initial sequence number is a sequence number of a PDCP packet corresponding to a 1^{st} MAC packet that corresponds to the first DRB or the first logical channel and that does not carry a logical channel identifier, and M is a positive integer.

In a possible implementation, when the second device is a terminal device, and the first device is a network device, the terminal device receives first indication information from the network device, where the first indication information indicates an identifier corresponding to the first DRB or an identifier corresponding to the first logical channel; and/or receives second indication information from the network device, where the second indication information indicates the available HARQ process range of the first DRB or the first logical channel. The terminal device learns of the available HARQ process range, to receive a downlink data packet through these HARQ processes.

In a possible implementation, when the second device is a network device, and the first device is a terminal device, the network device sends first indication information to the terminal device, where the first indication information indicates an identifier corresponding to the first DRB or an identifier corresponding to the first logical channel; and/or the network device sends second indication information to the terminal device, where the second indication information indicates the available HARQ process range of the first DRB or the first logical channel. The terminal device learns of the available HARQ process range, to send an uplink data packet through these HARQ processes.

In a possible implementation, the first indication information further indicates that the MAC packet corresponding to the first DRB or the first logical channel does not carry a logical channel identifier, that is, the MAC packet corresponding to the first DRB or the first logical channel does not carry a logical channel identifier, to reduce overheads of the MAC packet.

According to a second aspect, this application provides a data packet processing method. The method may be performed by a first device or a module in the first device. The method includes: determining a first HARQ process, where the first HARQ process belongs to an available HARQ process range of a first DRB or a first logical channel; obtaining a first data packet corresponding to the first DRB or the first logical channel, where the first data packet does not carry a logical channel identifier; and sending the first data packet to a second device through the first HARQ process.

It can be learned that, the first device does not carry a logical channel identifier for a data packet corresponding to the first DRB or the first logical channel, so that overheads of the data packet can be reduced.

In a possible implementation, that the first data packet does not carry the logical channel identifier may be that a first MAC packet does not carry the logical identifier, where the first data packet is the first MAC packet. The first MAC packet does not carry the logical channel identifier, so that overheads of the MAC packet can be reduced.

In a possible implementation, a size of the first MAC packet is indicated by length indication information included in downlink control information; or a size of the first MAC packet is indicated by a preconfigured scheduling resource, and a maximum amount of information that can be carried in the preconfigured scheduling resource is the same as the size of the first MAC packet; or a size of the first MAC packet is indicated by relative length indication information included in the first MAC packet, and the relative length indication information indicates an offset value of the size of the first MAC packet relative to a length threshold. It can be learned that, the size of the first MAC packet does not need to be indicated by using an L field in the first MAC packet, so that overheads of the MAC packet can be further reduced.

In a possible implementation, a first PDCP packet corresponding to the first data packet includes data amount indication information, indicating a data amount in the first PDCP packet. A size of the first MAC packet does not need to be indicated by using an L field in the first MAC packet, so that overheads of the MAC packet can be further reduced. The first PDCP packet corresponding to the first data packet is a first PDCP packet corresponding to the first MAC packet. The first device processes the first PDCP packet to obtain the first MAC packet.

In a possible implementation, if a maximum amount of information that can be carried in a scheduling resource corresponding to the first PDCP packet is different from a size of the first PDCP packet, the first device performs padding processing on the first PDCP packet, so that the first PDCP packet further includes a padding bit. In this way, a size of the first PDCP packet on which padding is performed is the same as a maximum amount of information that can be carried in a scheduling resource corresponding to the first PDCP packet.

In a possible implementation, the first MAC packet is obtained by processing a first PDCP packet. The first PDCP packet does not include a sequence number of the first PDCP packet, to reduce overheads of the PDCP packet. The second device may determine the sequence number of the PDCP packet based on a HARQ process for receiving the MAC packet.

In a possible implementation, a first PDCP packet does not include a sequence number of the first PDCP packet, and the sequence number of the first PDCP packet is sent from a PDCP layer to a MAC layer, and is transferred between layers, so that overheads of the PDCP packet can be reduced.

In a possible implementation, when determining the first HARQ process, the first device may determine the first HARQ process from the available HARQ process range in a polling manner, where the first HARQ process is idle.

In a possible implementation, when the second device is a terminal device, and the first device is a network device, the terminal device receives first indication information from the network device, where the first indication information indicates an identifier corresponding to the first DRB or an identifier corresponding to the first logical channel; and/or receives second indication information from the network device, where the second indication information indicates the available HARQ process range of the first DRB or the first logical channel. The terminal device learns of the available HARQ process range, to receive a downlink data packet through these HARQ processes.

In a possible implementation, when the second device is a terminal device, and the first device is a network device, the network device further sends the terminal device a first preconfigured scheduling resource, used to schedule downlink data corresponding to the first DRB or the first logical channel, so that the network device sends the first data packet to the terminal device based on the first preconfigured scheduling resource through the first HARQ process.

In a possible implementation, when the second device is a network device, and the first device is a terminal device, the network device sends first indication information to the terminal device, where the first indication information indicates an identifier corresponding to the first DRB or an identifier corresponding to the first logical channel; and/or the network device sends second indication information to the terminal device, where the second indication information indicates the available HARQ process range of the first DRB or the first logical channel. The terminal device learns of the available HARQ process range, to send an uplink data packet through these HARQ processes.

In a possible implementation, when the second device is a network device, and the first device is a terminal device, the network device further sends the terminal device a second preconfigured scheduling resource, used to schedule uplink data corresponding to the first DRB or the first logical channel, so that the terminal device sends the first data packet to the network device based on the second preconfigured scheduling resource through the first HARQ process.

In a possible implementation, the first indication information further indicates that the MAC packet corresponding to the first DRB or the first logical channel does not carry a logical channel identifier, that is, the MAC packet corresponding to the first DRB or the first logical channel does not carry a logical channel identifier, to reduce overheads of the MAC packet.

According to a third aspect, this application provides a communication apparatus. The communication apparatus may be a second device, may be an apparatus in the second device, or may be an apparatus that can be used together with the second device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For an operation performed by the communication apparatus and beneficial effects, refer to the method and the beneficial effects in the first aspect.

According to a fourth aspect, this application provides a communication apparatus. The communication apparatus may be a first device, may be an apparatus in the first device, or may be an apparatus that can be used together with the first device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For an operation performed by the communication apparatus and beneficial effects, refer to the method and the beneficial effects in the second aspect.

According to a fifth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect and the second aspect by using a logic circuit or executing code instructions.

According to a sixth aspect, this application provides a computer-readable storage medium. The storage medium stores computer programs or instructions, and when the computer programs or the instructions are executed by a communication apparatus, the method according to any one of the first aspect and the second aspect is implemented.

According to a seventh aspect, this application provides a computer program product including instructions. When a communication apparatus reads and executes the instructions, the communication apparatus is enabled to perform the method according to any one of the first aspect and the second aspect.

According to an eighth aspect, this application provides a communication system, including at least one communication apparatus configured to perform the method according to the first aspect, and at least one communication apparatus configured to perform the method according to the second aspect.

### BRIEF DESCRIPTION OF DRAWINGS

FIG. 1 is a diagram of a system architecture to which this application is applied;
FIG. 2 is a diagram of a network device including a CU node and a DU node;
FIG. 3 is a diagram of a protocol stack of a Uu interface in a 5G system;
FIG. 4-1 is a diagram of a format of an uplink SDAP PDU having an SDAP layer header;
FIG. 4-2 is a diagram of a format of a downlink SDAP PDU having an SDAP layer header;
FIG. 5-1 is a diagram of a format of a PDCP PDU in an SRB;
FIG. 5-2 is a diagram of a format of a PDCP PDU in a DRB;
FIG. 5-3 is a diagram of a format of a PDCP control PDU carrying an Ethernet header compression feedback;
FIG. 6-1 is a diagram of a format of a MAC subheader that does not carry an L field;
FIG. 6-2 is a diagram of a format of a MAC subheader having an L field of 8 bits;
FIG. 7 is a schematic flowchart of a data packet processing method according to Embodiment 1 of this application;
FIG. 8-1 is a diagram of a format of a PDCP data PDU according to this application;
FIG. 8-2 is a diagram of a format of another PDCP data PDU according to this application;
FIG. 9 is a diagram of an example of transmission according to this application;
FIG. 10 is a schematic flowchart of a data packet processing method according to Embodiment 2 of this application;
FIG. 11 is a schematic flowchart of a data packet processing method according to Embodiment 3 of this application;
FIG. 12 is a diagram of a form of communication between a first device and a second device;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

For ease of clearly describing the technical solutions of this application, in this application, terms such as "first" and "second" are used to distinguish between same items or similar items that provide basically same functions and purposes. A person skilled in the art may understand that the terms such as "first" and "second" do not limit a quantity or an execution sequence, and the terms such as "first" and "second" do not indicate a definite difference either. The term "and/or" describes an association relationship between associated objects, and indicates that three relationships may exist. For example, A and/or B may indicate the following three cases: Only A exists, both A and B exist, and only B exists. The character "/" generally indicates an "or" relationship between the associated objects.

First, a system architecture in this application is described.

This application may be applied to a 5^{th} generation (5^{th} generation, 5G) system, which may also be referred to as a new radio (new radio, NR) system; may be applied to a 6^{th} generation (6^{th} generation, 6G) system, a 7^{th} generation (7^{th} generation, 7G) system, or another future communication system; or may be further applied to a device-to-device (device-to-device, D2D) system, a machine-to-machine (machine-to-machine, M2M) system, a vehicle to everything (vehicle to everything, V2X) system, or the like.

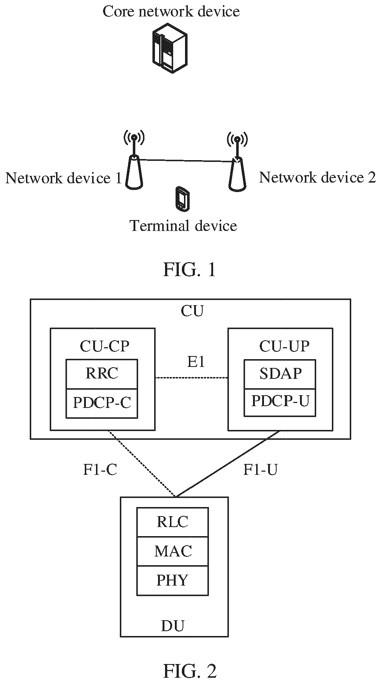

This application may be applied to a system architecture shown in FIG. 1. A communication system shown in FIG. 1 may include but is not limited to a terminal device, a network device, and a core network device. A quantity and forms of devices in FIG. 1 are used as an example, and do not constitute a limitation on embodiments of this application. For example, during actual application, a plurality of terminal devices may be included.

The terminal device, which is also referred to as UE, a mobile station (mobile station, MS), a mobile terminal (mobile terminal, MT), or the like, is a device that provides voice and/or data connectivity for a user, for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The network device, which may also be referred to as an access network device, is a radio access network (radio access network, RAN) node (or device) that connects the terminal device to a wireless network, and may also be referred to as a base station. Currently, some examples of the RAN node are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), or a wireless fidelity (wireless fidelity, Wi-Fi) access point (access point, AP). In addition, in a network structure, the network device may include a central unit (central unit, CU) node, a distributed unit (distributed unit, DU) node, or a RAN device including the CU node and the DU node. It should be noted that, the central unit node and the distributed unit node may alternatively have other names. This is not limited in this application.

For a network device including the CU node and the DU node, refer to FIG. 2. The network device splits protocol layers of a gNB in an NR system. Functions of some protocol layers are controlled by a CU in a centralized manner, and functions of some or all of remaining protocol layers are distributed in a DU, and the CU controls the DU in a centralized manner. Further, the central unit CU may be further divided into a control plane (CU-CP) and a user plane (CU-UP). The CU-CP is responsible for a control plane function, and mainly includes radio resource control (radio resource control, RRC) and a PDCP, namely, a PDCP-C, corresponding to the control plane. The PDCP-C is mainly responsible for data encryption and decryption, integrity protection, data transmission, and the like on the control plane. The CU-UP is responsible for a user plane function, and mainly includes an SDAP and a PDCP, namely, a PDCP-U, corresponding to the user plane. The SDAP is mainly responsible for processing data of a core network and mapping a flow (flow) to a bearer. The PDCP-U is mainly responsible for encryption and decryption, integrity protection, header compression, sequence number maintenance, data transmission, and the like on the user plane. The CU-CP and the CU-UP are connected through an E1 interface. The CU-CP represents that the gNB is connected to the core network through an NG interface, and is connected to the DU through an F1 interface-control plane, that is, an F1-C. The CU-UP is connected to the DU through an F1 interface-user plane, that is, an F1-U. Certainly, in another possible implementation, the PDCP-C is alternatively in the CU-UP. Optionally, the CU-CP may be further divided into a plurality of modules. For example, the CU-CP may be further divided into a radio resource management module and a radio resource control (radio resource control, RRC) message encoding and decoding processing module. The two modules may be connected through an interface.

The core network device is a device, in the core network (core network, CN), that provides service support for the terminal device. Currently, some examples of the core network device are: an access and mobility management function (access and mobility management function, AMF) entity, a session management function (session management function, SMF) entity, or a user plane function (user plane function, UPF) entity. Details are not listed one by one herein. The AMF entity may be responsible for access management and mobility management of the terminal device. The SMF entity may be responsible for session management, for example, user session establishment. The UPF entity may be a functional entity on the user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity.

In this application, the network device may schedule the terminal device to transmit an uplink data packet, and may further receive the uplink data packet from the terminal device. The network device may further send a downlink data packet to the terminal device, so that the terminal device can receive the downlink data packet from the network device. This application relates to a first device and a second device. The first device may be understood as a transmit end, and the second device may be understood as a receive end. For uplink data packet transmission, the first device is a terminal device, and the second device is a network device. For downlink data packet transmission, the first device is a network device, and the second device is a terminal device.

Second, related concepts in this application are described.

### 1. Protocol stack of a Uu interface

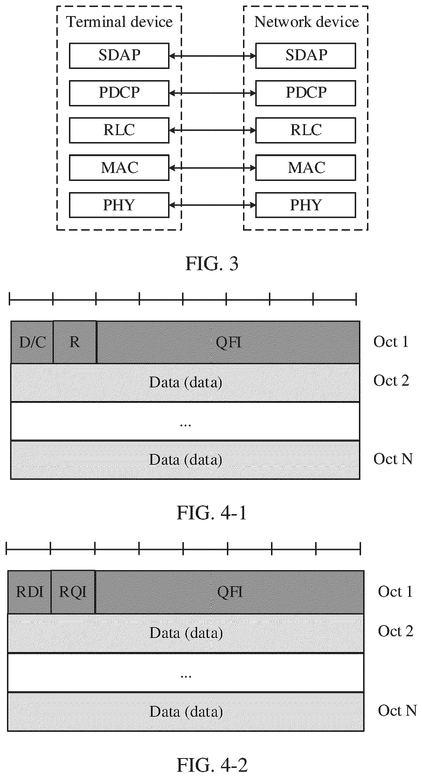

In a 5G system, the protocol stack of the Uu interface includes the following protocol layers: an SDAP layer, a PDCP layer, an RLC layer, a MAC layer, and a PHY layer, as shown in FIG. 3. Different protocol layers have respective functions. For a transmit end, a processing sequence of a data packet at the protocol layers of the Uu interface is: the SDAP layer->the PDCP layer->the RLC layer->the MAC layer->the PHY layer. On the contrary, for a receive end, a processing sequence of the data packet at the protocol layers of the Uu interface is: the PHY layer->the MAC layer->the RLC layer->the PDCP layer->the SDAP layer. It should be noted that, for a protocol layer (for example, a protocol layer A) of the transmit end, content received from an upper layer is referred to as a service data unit (service data unit, SDU) of the protocol layer A, and content sent by the protocol layer A to a lower layer is referred to as a protocol data unit (protocol data unit, PDU) of the protocol layer A. For example, for the transmit end, content received by the PDCP layer from the SDAP layer is referred to as a PDCP SDU, and content sent by the PDCP layer to the RLC layer is referred to as a PDCP PDU. For the receive end, content received by the PDCP layer from the RLC layer is referred to as a PDCP PDU, and content sent by the PDCP layer to the SDAP layer is referred to as a PDCP SDU. It should be noted that, that a protocol layer processes a data packet mentioned in this application includes that the protocol layer does not need to process the data packet (for example, the protocol layer only transparently transmits a data packet received from another protocol layer). It should be noted that, this application is described by using the foregoing protocol layers in the 5G system as an example, and may also be extended to another protocol layer in another system.

It should be noted that, the SDAP layer, the PDCP layer, the RLC layer, the MAC layer, and the PHY layer in this application may be replaced with other names. This is not limited in this application.

### (1) SDAP layer

Main processing of a data packet at the SDAP layer may include: mapping a quality of service (quality of service, QoS) flow to a data radio bearer (data radio bearer, DRB). A core network or a non-access stratum (non-access stratum, NAS) of UE classifies, based on characteristics of service data packets, data packets received from an application layer, and groups data packets having a same QoS characteristic to a same QoS flow. The DRB is a classification of data packets processed in the Uu interface. One DRB serves some data packets that have a same processing manner.

The SDAP layer may add an SDAP layer header to the data packet, or may not add the SDAP layer header. Whether to add the SDAP layer header may be determined by a network device. A basic principle may include: For uplink transmission, when one DRB carries one QoS flow, the network device may determine that the SDAP layer header does not need to be added; or when one DRB carries a plurality of QoS flows, the network device may determine to add the SDAP layer header. For downlink transmission, when the network device does not configure an access stratum (access stratum, AS) reflective characteristic or a NAS reflective characteristic, the SDAP layer header may not be configured; or when at least one of two reflective characteristics is configured, the SDAP layer header may be configured. The AS reflective characteristic means that a downlink data packet of a QoS flow carried in a DRB carries a QoS flow identifier (identifier, ID) at the SDAP layer, and when a terminal device detects the QoS flow ID, the terminal device maps an uplink QoS flow that has the same QoS flow ID to the same DRB. This may be understood as obtaining an uplink mapping relationship between a QoS flow and a DRB based on a downlink mapping relationship between the QoS flow and the DRB. The NAS reflective characteristic means that the terminal device may generate a correspondence between an uplink data packet and a QoS flow based on a correspondence between a downlink data packet and the QoS flow. Specifically, when receiving a downlink data packet of a QoS flow, the terminal device generates an uplink packet filter of the QoS flow. The uplink packet filter of the QoS flow means that when an uplink data packet meets a specific rule, the uplink data packet is mapped to the QoS flow. For example, when the uplink data packet is an IP-type packet, the uplink packet filter may be an IP address of a source end, an IP address of a destination end, a port number of the source end, a port number of the destination end, or the like. When an IP address of a source end, an IP address of a destination end, a port number of the source end, and a port number of the destination end that are carried in an uplink data packet meet a rule corresponding to the uplink packet filter of the QoS flow, the uplink data packet is mapped to the QoS flow. The terminal device generates an uplink packet filter based on the NAS reflective characteristic of the QoS flow and an IP address of a source end, an IP address of a destination end, a port number of the source end, a port number of the destination end, and the like that are carried in the downlink data packet of the QoS flow. For example, the IP address and the port number of the source end that are carried in the downlink data packet are used as the IP address and the port number of the destination end in the uplink packet filter, and the IP address and the port number of the destination end that are carried in the downlink data packet are used as the IP address and the port number of the source end in the uplink packet filter.

For a format of the SDAP layer header, refer to FIG. 4-1 and FIG. 4-2. FIG. 4-1 is a diagram of a format of an uplink SDAP PDU having the SDAP layer header. FIG. 4-2 is a diagram of a format of a downlink SDAP PDU having the SDAP layer header. Data (Data) represents a data packet received by the SDAP layer from an upper layer. D/C indicates whether an SDAP PDU is a control-type PDU or a data-type PDU. If a value of D/C is 0, it indicates the control-type PDU. If a value of D/C is 1, it indicates the data-type PDU. A QoS flow identifier (QoS flow ID, QFI) is used to identify a QoS flow. A reflective QoS flow to DRB mapping indication (reflective QoS flow to DRB mapping indication, RDI) indicates whether there is an AS reflective characteristic, and may also be described as indicating whether to update a mapping rule between a QoS flow and a DRB. A reflective QoS indication (reflective QoS indication, RQI) indicates whether there is a NAS reflective characteristic, and may also be described as indicating whether to notify a NAS to update a mapping rule between a service data filter (service data filter, SDF) and a QoS flow.

In this application, the network device may not configure an uplink SDAP header and/or a downlink SDAP header for a DRB corresponding to a specific service. The specific service may be indicated or configured by the network device. In this application, the DRB corresponding to the specific service is described as a first DRB. For example, the network device sends an RRC message to the terminal device, and does not configure the uplink SDAP header and/or the downlink SDAP header through the first DRB. An SDAP layer of the receive end and an SDAP layer of the transmit end may perform corresponding processing according to the 37.324 protocol.

### (2) PDCP layer

Main processing of a data packet at the PDCP layer may include: header compression, encryption, integrity protection, PDCP sequence number (sequence number, SN) addition, and the like. The header compression is used to compress some TCP/IP and UDP/IP headers in data packets received from an upper layer to reduce overheads. The encryption is used to encrypt data, so that the data is not obtained by another unauthorized receive end. The integrity protection is used to perform integrity protection on data, so that data content is not modified by others. Usually, integrity protection is performed before encryption. Usually, one DRB corresponds to one PDCP entity. In the Uu interface, a radio bearer RB (radio bearer) is used to carry transmission between the network device and the terminal device. An RB corresponding to service data at the application layer is referred to as a DRB. An RB corresponding to an RRC message generated by an RRC layer is referred to as a signaling radio bearer (signaling radio bearer, SRB) SRB.

A format of a PDCP layer header varies with the RB.

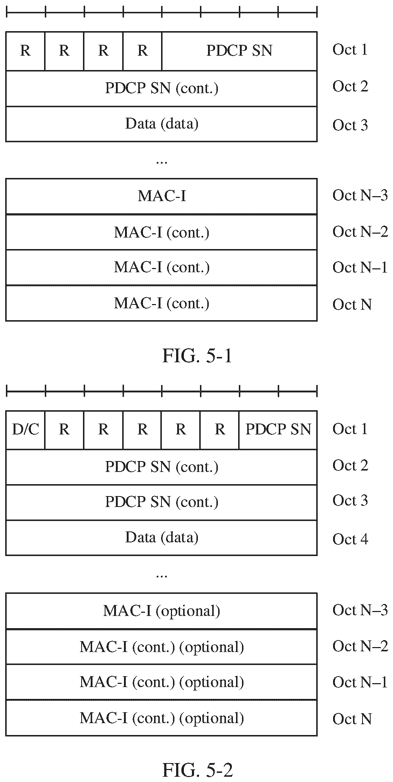

For the SRB, refer to a PDCP PDU shown in FIG. 5-1. In FIG. 5-1, a length of a PDCP SN is fixed to 12 bits (bits), and integrity protection is performed on a data packet. PDCP SN (cont.) represents a consecutive PDCP SN. To be specific, a part of the PDCP SN is placed in Oct 1, and the remaining part is placed in Oct 2. After integrity protection is performed, the PDCP layer adds, to the PDCP PDU, a message authentication code for integrity (message authentication code for integrity, MAC-I) generated through the integrity protection. MAC-I (cont.) represents a consecutive MAC-I. To be specific, a part of the MAC-I is placed in Oct N-3, and the remaining part is placed in Oct N-2 to Oct N. In FIG. 5-1, R represents a reserved bit.

For the DRB, a length of a PDCP SN is 12 bits or 18 bits, and the network device may configure whether to perform integrity protection on a data packet, so that a MAC-I generated through the integrity protection may be added to the PDCP SN. Refer to a PDCP PDU shown in FIG. 5-2. A length of a PDCP SN of the PDCP PDU is 18 bits. In FIG. 5-2, D/C indicates whether the PDCP PDU is a control-type PDU or a data-type PDU. The control-type PDU may be represented as a PDCP control PDU, and the data-type PDU may be represented as a PDCP data PDU. Data carried in the PDCP data PDU is content received by the PDCP layer from the upper layer. The content may be obtained by the PDCP layer by performing processing such as header compression and encryption on the content received from the upper layer. The PDCP control PDU carries content generated by the PDCP layer.

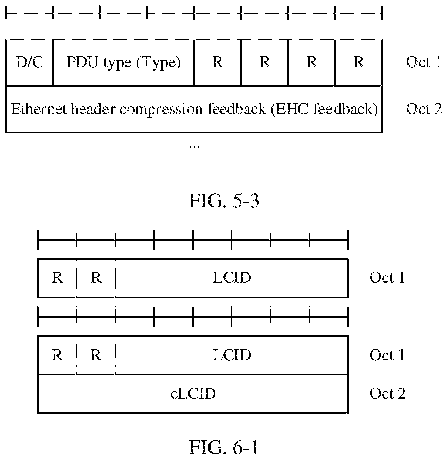

In addition, the PDCP layer further generates some PDCP control PDUs. The PDCP control PDU includes a PDCP status report (PDCP status report) generated by the PDCP layer, and a compression feedback generated by performing header compression or decompression by the PDCP layer, where the compression feedback is, for example, an interspersed robust header compression feedback (interspersed ROHC feedback) or an Ethernet header compression feedback (EHC feedback). For example, refer to a format of a PDCP control PDU carrying the Ethernet header compression feedback shown in FIG. 5-3, where a PDU type (type) indicates a control type of a PDU.

In this application, for a data-type PDCP PDU, a header of the PDCP PDU may not carry a PDCP SN. For example, a PDCP SN in Oct 1 to Oct 3 in FIG. 5-2 is deleted. Alternatively, the PDCP PDU does not carry a header. For example, all content in Oct 1 to Oct 3 in FIG. 5-2 is deleted. In this way, when the transmit end sends a data packet, header overheads of a PDCP packet can be reduced.

### (3) RLC layer

Transmission modes at the RLC layer may be classified into a transparent mode (transparent mode, TM), an unacknowledged mode (unacknowledged mode, UM), and an acknowledged mode (acknowledged mode, AM). Different transmission modes have different functions. For the AM, main processing of a data packet at the RLC layer may include: an automatic repeat request (automatic repeat request, ARQ), segmentation, reassembly, and RLC SN addition. For the UM, main processing of the data packet at the RLC layer may include: segmentation, reassembly, and RLC SN addition. For the TM, no processing is performed at the RLC layer. Configuration of the RLC layer is configured based on a logical channel. The logical channel is a concept for allocating transmitted content. Usually, one logical channel corresponds to one RB.

A header of an RLC PDU varies with the transmission mode. For example, for the TM, the transmit end does not perform any processing on an RLC SDU because the RLC PDU does not carry an RLC header. For another example, for the UM, the transmit end supports a segmentation function, and adds segmentation information (segmentation info, SI) to the header of the RLC PDU. If a value of the SI is 00, it indicates that the RLC PDU includes one complete RLC SDU. If a value of the SI is 01, it indicates that the RLC PDU includes a first segment of the RLC SDU. If a value of the SI is 11, it indicates that the RLC PDU includes a middle segment of the RLC SDU. If a value of the SI is 10, it indicates that the RLC PDU includes a last segment of the RLC SDU. For the header of the RLC PDU in the three transmission modes, refer to descriptions of an RLC layer-related protocol in the 3^{rd} generation partnership project (3^{rd} generation partnership project, 3GPP).

In this application, the RLC layer may use the TM mode, to reduce header overheads of a PDCP packet.

### (4) MAC layer

Data processing at the MAC layer mainly includes: mapping between a logical channel and a transport channel, multiplexing of the logical channel, error correction through a hybrid automatic repeat request (hybrid automatic repeat request, HARQ), and other functions. The transmission channel is a classification of how to transmit a service.

One MAC PDU may include one or more MAC subPDUs (subPDUs). One MAC subPDU may include one MAC subheader (subheader), or include one MAC subheader and one MAC SDU, or include one MAC subheader and one MAC control element (control element, CE), or include one MAC subheader and padding (padding). The MAC SDU may be of various lengths. One MAC subheader corresponds to one MAC SDU, one MAC CE, or padding. The MAC CE is control information generated by the MAC layer.

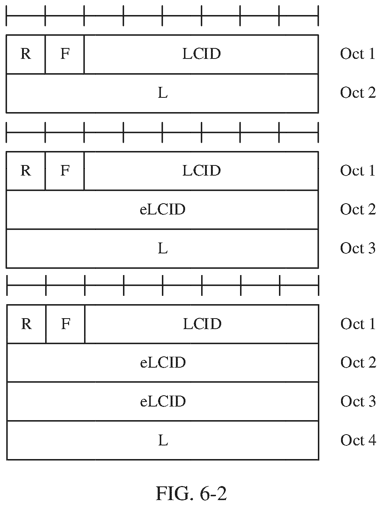

For a MAC subheader corresponding to a MAC CE of a fixed size, padding, and a MAC SDU including an uplink (uplink, UL) CCCH, the MAC subheader includes at least two of a reserved bit (R), a logical channel identifier (logical channel identifier, LCID), and an extended logical channel identifier (eLCID). For example, refer to FIG. 6-1. A 1^{st} MAC subheader includes R and an LCID, and a 2^{nd} MAC subheader includes R, an LCID, and an eLCID. Another MAC subheader includes R, F, an LCID, and L (a length), and optionally further includes an eLCID. For example, refer to FIG. 6-2. The MAC subheader is a MAC subheader having an L field of 8 bits. F indicates a size occupied by L. L indicates a size of a MAC SDU or a MAC CE, where the size is in a unit of byte.

At the MAC layer, there are some MAC SDUs that do not need MAC headers, for example, a MAC SDU used to transmit a paging channel and a broadcast channel.

One or more MAC subPDUs form one MAC PDU, and a MAC subPDU carrying padding is located at the end of the MAC PDU. The transmit end determines, based on a size of a transport block (transport block, TB) and a size of the MAC subPDU, whether to add padding and determines a padding size. The TB is data (a MAC PDU) that can be transmitted by using a resource used by the transmit end.

A HARQ function at the MAC layer is used to ensure successful transmission between the transmit end and the receive end. The MAC layer supports a plurality of HARQ processes (processes) due to impact of a transmission delay between the transmit end and the receive end. One HARQ process supports transmission of one or more TBs, and a HARQ process identifier is used to identify the HARQ process.

In this application, a header of the MAC PDU may not carry the LCID (and further does not carry the eLCID), or the MAC PDU does not carry the LCID, to reduce header overheads of a MAC packet. Further, the MAC PDU may not carry L, to further reduce header overheads of the MAC packet. Alternatively, the MAC PDU may carry relative length indication information, where the relative length indication information indicates an offset value of the MAC PDU relative to a length threshold, to determine a size of the MAC PDU.

It should be noted that, for a protocol layer (for example, a protocol layer A) of the transmit end, a PDU of the protocol layer A may be described as a packet of the protocol layer A. For example, a PDCP PDU may be described as a PDCP packet, and a MAC PDU may be described as a MAC packet. In this application, an SDAP packet, the PDCP packet, an RLC packet, and the MAC packet may alternatively be described by using other names.

### 2. NTN network

The NTN network may also be referred to as a satellite communication network. In the NTN network, a distance between a terminal device and a base station that provides communication is long, and channel quality of wireless communication is poor. Therefore, a non-terrestrial communication range corresponding to one base station is limited. For an architecture of the NTN network, refer to detailed descriptions in the protocol TR38.821.

In the NTN network, in some cell edge areas, because a header is added to a data packet at each protocol layer of a Uu interface, a size of the data packet becomes large, and UE may fail to correctly receive the data packet. Consequently, coverage of the NTN network is affected. For example, a voice data packet of 4.75 kbps (for example, voice over NR (voice over NR, VoNR)) is generated every 20 ms. A size of the voice data packet is about 14 bytes. After RTP/UDP/IP processing, 40-byte header overheads are added to the voice data packet. Then, two bytes are added at a PDCP layer through the Uu interface. In addition, RTP/UDP/IP header compression is performed at the PDCP layer to generate a 2-byte header (while an RTP header/a UDP header/an IP header is reduced by 40 bytes). A 1-byte header is added at an RLC layer, and a 2-byte header is added at a MAC layer. In this way, header overheads of the Uu interface are 8/22=36%.

In view of this, this application provides a data packet processing method and an apparatus, to reduce header overheads of a data packet in a Uu interface transmission process, and improve network coverage. A type of the data packet in this application may be voice, a video, audio/video, a text, or the like.

The following describes the data packet processing method provided in this application with reference to the accompanying drawings.

Embodiment 1: In downlink data transmission, a network device sends data to a terminal device.

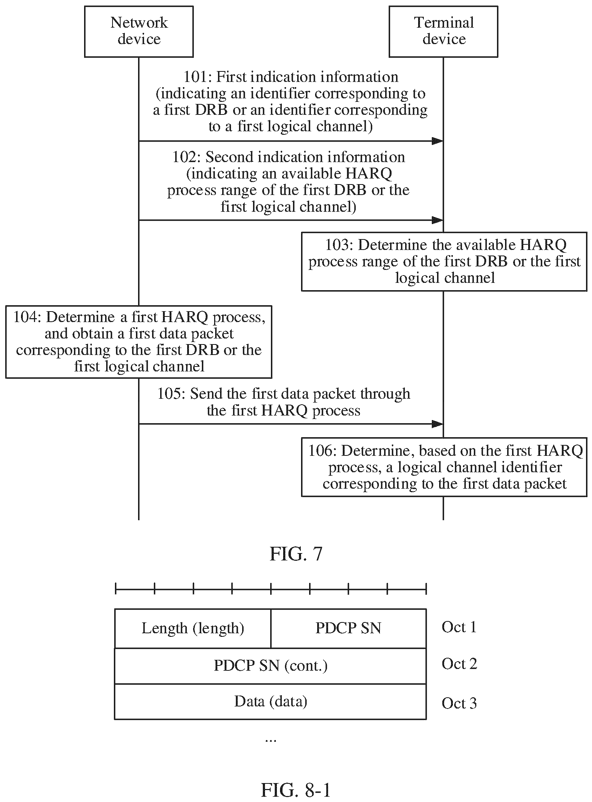

FIG. 7 is a schematic flowchart of a data packet processing method according to Embodiment 1 of this application. The method may include but is not limited to the following steps.

101: The network device sends first indication information to the terminal device. Correspondingly, the terminal device receives the first indication information from the network device.

The first indication information indicates an identifier corresponding to a first DRB or an identifier corresponding to a first logical channel. The identifier corresponding to the first DRB is used to identify the first DRB. The first DRB may be any DRB or a DRB corresponding to a specific service. The identifier corresponding to the first logical channel is used to identify the first logical channel. The first logical channel may be any logical channel or a logical channel corresponding to a specific service. If one DRB may correspond to one logical channel, there is a correspondence between the first DRB and the first logical channel. If one DRB may correspond to a plurality of logical channels, a plurality of logical channels corresponding to the first DRB include the first logical channel. A data packet corresponding to a specific service needs to be processed in a manner of reducing header overheads. Reducing header overheads means reducing header overheads of the data packet at at least one of an SDAP layer, a PDCP layer, an RLC layer, and a MAC layer. In this application, reducing header overheads means reducing header overheads of a MAC packet, and header overheads of a PDCP packet may be further reduced. In an implementation, the first indication information further indicates that a data packet corresponding to the first DRB or the first logical channel is processed in the manner of reducing header overheads.

In an implementation, the first indication information further indicates that the MAC packet corresponding to the first DRB or the first logical channel does not carry a logical channel identifier, to reduce header overheads of the MAC packet. The MAC packet may also be described as a MAC PDU, a MAC data packet, or the like. That the MAC packet does not carry the logical channel identifier may be that a MAC subheader does not carry the logical channel identifier, or the MAC packet does not carry any header, and therefore does not carry the logical channel identifier. The logical channel identifier herein may be an LCID and/or an eLCID. Optionally, that the first indication information indicates that the MAC packet corresponding to the first DRB or the first logical channel does not carry the logical channel identifier may be implemented by using a value of one bit. For example, if the value of the bit is 1, it indicates that the MAC packet corresponding to the first DRB or the first logical channel does not need to carry the logical channel identifier; or if the value of the bit is 0, it indicates that the MAC packet corresponding to the first DRB or the first logical channel needs to carry the logical channel identifier.

In another implementation, the network device indicates the identifier of the first DRB or the identifier of the first logical channel by using the first indication information. The network device and the terminal device may use, by default, a manner of reducing header overheads of the MAC packet for a data packet of the first DRB or the first logical channel, that is, consider, by default, that the MAC packet corresponding to the first DRB or the first logical channel does not carry a logical channel identifier. Alternatively, a protocol specifies that MAC packets corresponding some DRBs (including the first DRB) or some logical channels (including the first logical channel) do not need to carry logical channel identifiers. In this case, the network device and the terminal device may indicate, based on the first indication information, that the MAC packet corresponding to the first DRB or the first logical channel does not carry the logical channel identifier.

It may be understood that, the first indication information indicates that a manner of reducing header overheads of the MAC layer is used for the first DRB or the first logical channel.

Optionally, the terminal device sends capability information to the network device. The capability information indicates that the terminal device supports a case in which the MAC packet does not carry the logical channel identifier, in other words, the terminal device supports the manner of reducing header overheads of the MAC layer. Alternatively, the terminal device has a capability of not including the logical channel identifier in the MAC packet, or the capability information indicating that the terminal device supports processing in the manner of reducing header overheads. The network device may send the first indication information to the terminal device based on the capability information.

For uplink data transmission, when receiving the first indication information, the terminal device may determine the first DRB or the first logical channel, to determine that an uplink MAC packet of the first DRB or the first logical channel does not need to carry a logical channel identifier. For downlink data transmission, when receiving the first indication information, the terminal device may determine that a downlink MAC packet of the first DRB or the first logical channel does not need to carry a logical channel identifier, and obtain the logical channel identifier by using step 106 instead of obtaining the logical channel identifier from the downlink MAC packet.

Optionally, if a structure of the network device is shown in FIG. 2, to be specific, the network device uses a CU-DU split architecture, a CU sends indication information A to a DU. The indication information A indicates or is used to request that the MAC packet of the first DRB or the first logical channel does not carry the logical channel identifier, or indicates or is used to request that the data packet corresponding to the first DRB or the first logical channel is processed in the manner of reducing header overheads. Optionally, the indication information A carries the identifier corresponding to the first DRB or the first logical channel. When receiving the indication information A, the DU may send acknowledgment information to the CU, to determine that the MAC packet of the first DRB or the first logical channel does not carry the logical channel identifier, or determine that the data packet corresponding to the first DRB or the first logical channel is processed in the manner of reducing header overheads. Optionally, before the CU sends the indication information A to the DU, the DU sends first information to the CU. The first information indicates that the DU supports a case in which the MAC packet does not carry the logical channel identifier, or indicates that processing in the manner of reducing header overheads is supported.

Further, a CU-CP sends indication information B to a CU-UP. The indication information B indicates or is used to request that the MAC packet of the first DRB or the first logical channel does not carry the logical channel identifier, or indicates or is used to request that the data packet corresponding to the first DRB or the first logical channel is processed in the manner of reducing header overheads. Optionally, the indication information B carries the identifier corresponding to the first DRB or the first logical channel. When receiving the indication information B, the CU-UP may send acknowledgment information to the CU-CP, to determine that the MAC packet of the first DRB or the first logical channel does not carry the logical channel identifier. Optionally, before the CU-CP sends the indication information B to the CU-UP, the CU-UP sends second information to the CU-CP. The second information indicates that the CU-UP supports a case in which the MAC packet does not carry the logical channel identifier.

The information exchanged between the CU and the DU may be understood as information for reducing header overheads of the MAC layer. The CU and the DU may further exchange information for reducing header overheads of another layer, for example, exchange information for reducing header overheads of the PDCP layer.

It should be noted that, an interaction indication of the manner of reducing header overheads between the CU and the DU and an interaction indication of the manner of reducing header overheads between the CU-CP and the CU-UP may be independently implemented from other steps in this application.

Step 101 is optional. To be specific, the network device and the terminal device may determine, in another manner, the identifier corresponding to the first DRB or the identifier corresponding to the first logical channel. For example, the protocol specifies that data packets corresponding to some DRBs (including the first DRB) or some logical channels (including the first logical channel) need to be processed in the manner of reducing header overheads, or the logical channel identifier needs to be carried in the MAC packet.

102: The network device sends second indication information to the terminal device. Correspondingly, the terminal device receives the second indication information from the network device.

The second indication information indicates an available HARQ process range of the first DRB or the first logical channel. The available HARQ process range of the first DRB or the first logical channel may be an available HARQ process range of a PDCP data PDU corresponding to the first DRB or the first logical channel. The available HARQ process range is a range of HARQ processes that can be used. The network device allocates the available HARQ process range to the first DRB or the first logical channel, so that the network device and the terminal device can receive and send, through these HARQ processes, the data packet corresponding to the first DRB or the first logical channel.

In an implementation, the network device notifies the available HARQ process range of the first DRB or the first logical channel by using the second indication information. In another implementation, the network device does not send the second indication information, and the available HARQ process range of the first DRB or the first logical channel may be agreed on in the protocol. Alternatively, the network device configures a correspondence between a plurality of available HARQ process ranges and a plurality of DRBs (or a correspondence between a plurality of available HARQ process ranges and a plurality of logical channels). The terminal device may determine the available HARQ process range of the first DRB or the first logical channel based on the identifier of the first DRB or the identifier of the first logical channel. For ease of description, the available HARQ process range of the first DRB or the first logical channel is briefly referred to as an available HARQ range in the following.

It should be noted that, either step 101 or step 102 may be performed, for example, step 101 or step 102 is performed. When step 101 is performed, the network device and the terminal device may determine the available HARQ process range in another manner. When step 102 is performed, the network device and the terminal device may consider, by default, that the available HARQ process range indicated by the second indication information is applicable to the first DRB or the first logical channel. Both step 101 and step 102 may be performed. Step 101 and step 102 may be performed simultaneously, or step 101 may be performed before step 102. The first indication information and the second indication information may be separately sent, or may be sent by using one message. The message carries both the first indication information and the second indication information. Alternatively, the first indication information and the second indication information are one piece of indication information, and the indication information not only indicates the identifier of the first DRB or the identifier of the first logical channel, but also indicates the available HARQ process range.

Optionally, if the structure of the network device is shown in FIG. 2, the CU sends indication information C to the DU. The indication information C indicates the available HARQ process range of the first DRB or the first logical channel. Optionally, the indication information C carries the identifier of the first DRB or the first logical channel. Optionally, when receiving the indication information C, the DU may send acknowledgment information to the CU, to determine the available HARQ process range of the first DRB or the first logical channel. Optionally, further, the CU-CP sends indication information D to the CU-UP. The indication information D indicates the available HARQ process range. Optionally, when receiving the indication information D, the CU-UP may send acknowledgment information to the CU-CP, to determine the available HARQ process range of the first DRB or the first logical channel.

It should be noted that, for downlink transmission, the available HARQ process range of the first DRB or the first logical channel is an available HARQ process range corresponding to downlink transmission of the first DRB or the first logical channel. For uplink transmission, the available HARQ process range of the first DRB or the first logical channel is an available HARQ process range corresponding to uplink transmission of the first DRB or the first logical channel.

103: The terminal device determines the available HARQ process range of the first DRB or the first logical channel.

Optionally, when receiving the second indication information, the terminal device determines the available HARQ process range based on the second indication information.

Optionally, when receiving the first indication information, the terminal device learns that the data packet corresponding to the first DRB or the first logical channel needs to be processed in the manner of reducing header overheads. Specifically, for downlink data transmission, the terminal device learns, based on the first indication information, that a downlink data packet corresponding to the first DRB or the first logical channel is processed in the manner of reducing header overheads. For uplink data transmission, the terminal device learns, based on the first indication information, that the terminal device needs to process an uplink data packet corresponding to the first DRB or the first logical channel in the manner of reducing header overheads.

Optionally, when receiving the first indication information and the second indication information, the terminal device learns that a data packet in a HARQ process corresponding to the available HARQ process range is the data packet corresponding to the first DRB or the first logical channel, and the data packet needs to be processed in the manner of reducing header overheads. Specifically, for downlink data transmission, the terminal device learns, based on the first indication information, that downlink data packets received from the HARQ process corresponding to the available HARQ process range are downlink data packets corresponding to the first DRB or the first logical channel, and these downlink data packets are processed in the manner of reducing header overheads. For uplink data transmission, the terminal device learns, based on the first indication information, that the terminal device needs to send, in the HARQ process corresponding to the available HARQ process range, the uplink data packet corresponding to the first DRB or the first logical channel, and needs to process the data packet in the manner of reducing header overheads.

The foregoing three optional manners are used as examples. The terminal device may further determine the available HARQ process range in another manner.

104: The network device determines a first HARQ process, and obtains a first data packet corresponding to the first DRB or the first logical channel.

The first HARQ process may be used to transmit the first data packet. The first data packet is any one of a plurality of data packets corresponding to the first DRB or the first logical channel.

Optionally, the first data packet is a first MAC packet, and the first MAC packet is any one of a plurality of MAC packets corresponding to the first DRB or the first logical channel. It is assumed that a data packet on which RTP/UDP/IP processing is performed is a first IP packet. The first IP packet is processed by the SDAP layer, the PDCP layer, the RLC layer, and the MAC layer in sequence, to obtain the first MAC packet, and the first MAC packet is finally sent through a PHY layer. It is assumed that the first IP packet is processed by the SDAP layer to obtain a first SDAP packet, the first SDAP packet is processed by the PDCP layer to obtain a first PDCP packet, and the first PDCP packet is processed by the RLC layer to obtain a first RLC packet. The first RLC packet is processed by the MAC layer to obtain the first MAC packet. If the first PDCP packet is a packet generated by the PDCP layer, that is, a PDCP control packet, the packet does not need to be processed by the SDAP layer. After the PDCP layer generates the first PDCP packet, the first PDCP packet is processed by the RLC layer to obtain the first RLC packet. The first RLC packet is processed by the MAC layer to obtain the first MAC packet.

It should be noted that, a sequence of determining the first HARQ process by the network device and obtaining the first data packet corresponding to the first DRB or the first logical channel is not limited in this application.

For the SDAP layer, the network device does not configure a downlink SDAP header for the first DRB or the first logical channel. To be specific, the network device processes the first IP packet at the SDAP layer to obtain the first SDAP packet, where the first SDAP packet does not carry an SDAP header. It should be noted that, there may be no SDAP layer in some communication systems.

For the PDCP layer, the network device allocates, in a manner in 3GPP 38.323, a PDCP SN to a data packet (for example, the first SDAP packet) received from an upper layer, and performs operations such as header compression and encryption.

In a first implementation, when the first PDCP packet is generated, a header of the first PDCP packet does not carry a PDCP SN; or the first PDCP packet does not carry a header, so that the first PDCP packet does not carry a PDCP SN. This may reduce header overheads of the PDCP packet. Optionally, when sending the first PDCP packet to a lower layer (for example, the RLC layer or the MAC layer), the PDCP layer notifies the lower layer that the first PDCP packet is a PDCP data PDU or a PDCP control PDU. Further, if the first PDCP packet is the PDCP data PDU, the PDCP layer further sends the PDCP SN of the first PDCP packet to the lower layer; or if the first PDCP packet is the PDCP control PDU, the PDCP layer does not send the PDCP SN. Optionally, when sending the first PDCP packet to the lower layer, the PDCP layer notifies the MAC layer not to carry the logical channel identifier during processing. Optionally, the PDCP layer does not need to send the PDCP SN of the first PDCP packet to the lower layer, and the MAC layer may determine the PDCP SN of the first PDCP packet. A specific determining manner is described in determining the first HARQ process. Optionally, the network device does not need to perform integrity protection processing at the PDCP layer, to reduce overheads of adding a MAC-I at the PDCP layer.

Optionally, if the structure of the network device is shown in FIG. 2, to be specific, the network device uses the CU-DU split architecture, when sending the first PDCP packet to the DU, the CU notifies, through an interface between the CU and the DU, the DU that the first PDCP packet is a PDCP data PDU or a PDCP control PDU. Further, if the first PDCP packet is the PDCP data PDU, the CU further sends the PDCP SN of the first PDCP packet to the DU.

In a second implementation, when the first PDCP packet is generated, if the first PDCP packet is a PDCP data PDU, a header of the first PDCP packet may carry data amount indication information, indicating a data amount in the first PDCP packet, in other words, indicating a size of data in the first PDCP packet. Optionally, to reduce overheads occupied by the data amount indication information, the data amount indication information indicates an offset value of the size of the data in the first PDCP packet relative to a length threshold, so that the terminal device can determine the size of the data in the first PDCP packet based on the offset value and the length threshold. The length threshold may be predefined or preconfigured in the protocol, or may be notified by the network device to the terminal device. A specific value is not limited in this application. Optionally, the header of the first PDCP packet further carries a PDCP SN. For example, refer to a format of a PDCP data PDU shown in FIG. 8-1. A header of the PDCP data PDU includes a length (length, L) and a PDCP SN. The length is data amount indication information, indicating a size of data in the PDCP data PDU. Optionally, when sending the first PDCP packet to a lower layer (for example, the RLC layer or the MAC layer), the PDCP layer notifies the lower layer that the first PDCP packet is a PDCP data PDU or a PDCP control PDU, or notifies the MAC layer not to carry the logical channel identifier during processing, or notifies the MAC layer not to carry L during processing. Optionally, the network device does not need to perform integrity protection processing at the PDCP layer, to reduce overheads of adding a MAC-I at the PDCP layer.

Optionally, if the structure of the network device is shown in FIG. 2, to be specific, the network device uses the CU-DU split architecture, the CU may notify the DU not to add L at the MAC layer. Further, the CU-CP may notify the CU-UP to add the data amount indication information to the PDCP packet. Further, the CU-CP may notify the CU-UP of a value of the length threshold.

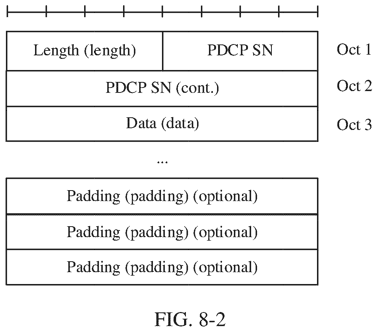

If a maximum amount of information that can be carried in a scheduling resource corresponding to the first PDCP packet does not match a size of the first PDCP packet, the PDCP layer further performs padding on the first PDCP packet, to be specific, adds a padding bit, so that the first PDCP packet further includes the padding bit. The scheduling resource may be a dynamic scheduling resource or a preconfigured scheduling resource, and is sent by the network device to the terminal device. The maximum amount of information that can be carried in the scheduling resource is a maximum size of a data packet that can be scheduled by using the scheduling resource for transmission, for example, a maximum size of a MAC packet or a maximum size of a PDCP packet. The maximum amount of information that can be carried may also be described as a maximum information capacity of a MAC packet or a PDCP packet that can be carried, a maximum size of a MAC packet or a PDCP packet that can be carried, a maximum information capacity of a MAC packet or a PDCP packet that can be transmitted, a maximum size of a MAC packet or a PDCP packet that can be transmitted, or the like. Usually, the maximum amount of information that can be carried in the scheduling resource is greater than a PDCP packet. Therefore, the padding bit is added to the first PDCP packet at the PDCP layer, so that a size of the first PDCP packet on which padding is performed matches the maximum amount of information that can be carried in the scheduling resource corresponding to the first PDCP packet. The matching may be understood as the same. When finding that the size of the first PDCP packet does not match the maximum amount of information that can be carried in the scheduling resource corresponding to the first PDCP packet, the PDCP layer may add the padding bit to the first PDCP packet, so that the maximum amount of information that can be carried in the scheduling resource corresponding to the first PDCP packet is the same as the size of the first PDCP packet. The PDCP layer may perform a padding operation after header compression, integrity protection, or encryption, or after header compression and before integrity protection or encryption. For example, refer to a format of another PDCP data PDU shown in FIG. 8-2. The PDCP data PDU further includes a padding bit. Optionally, the MAC layer notifies the PDCP layer of a maximum amount of information that can be carried or a quantity of padding bits. For example, optionally, if the structure of the network device is shown in FIG. 2, to be specific, the network device uses the CU-DU split architecture, the DU sends indication information E to the CU. The indication information E indicates a maximum amount of information that can be carried in a scheduling resource of the first DRB or the first logical channel. The DU may send the indication information E to the CU through a control plane or a user plane. Further, the CU-CP sends indication information F to the CU-UP. The indication information F indicates the maximum amount of information that can be carried in the scheduling resource of the first DRB or the first logical channel.

When the first PDCP packet includes the data amount indication information, during processing at the MAC layer, the first MAC packet may not carry L, to reduce overheads of the MAC packet.

It should be noted that, the first implementation and the second implementation may be implemented independently.

For the RLC layer, the network device may configure a TM mode for the first DRB or the first logical channel. In this way, when the network device sends a downlink data packet, no RLC header is carried, to reduce header overheads of an RLC packet. When receiving the downlink data packet, the terminal device does not perform any processing at the RLC layer, to reduce operation steps. Optionally, if the PDCP layer of the network device further notifies a PDCP SN corresponding to the first PDCP packet when sending the first PDCP packet to the RLC layer, the RLC layer further notifies a PDCP SN corresponding to the first RLC packet when sending the first RLC packet to the MAC layer. Optionally, the RLC layer further notifies the MAC layer that the first PDCP packet is a PDCP data PDU or a PDCP control PDU, or notifies the MAC layer not to carry the logical channel identifier during processing.

For the MAC layer, the network device determines the first HARQ process.

The network device may determine, in a polling manner, the first HARQ process from the available HARQ process range corresponding to the first DRB or the first logical channel, where the first HARQ process is idle. The polling manner may be: selecting, as the first HARQ process from the available HARQ process range, a currently idle HARQ process with a smallest HARQ process ID. For example, the available HARQ process range is a HARQ process 1 to a HARQ process 30, the HARQ process 1 to the HARQ process 10 have been scheduled to transmit the downlink data packet corresponding to the first DRB or the first logical channel, and the 10 HARQ processes are not idle (for example, feedback information from the terminal device has not been received, and it indicates that the downlink data packet corresponding to the 10 HARQ processes has been correctly received by the terminal device; or the network device considers that the terminal device may not have correctly received the downlink data packet corresponding to the 10 HARQ processes). In this case, when sending a new downlink data packet corresponding to the first DRB or the first logical channel again, the network device selects the HARQ process 11 for the terminal device, in other words, the HARQ process 11 is the first HARQ process.

The foregoing polling manner may be simplified as follows: A corresponding HARQ process is used in the available HARQ process range through polling. For example, an N^{th} HARQ process in the available HARQ process range is used to send the first MAC packet, in other words, a sequence number of the first HARQ process in the available HARQ process range is N, where N={(PDCP SN-PDCP SN_start) mod (a quantity of HARQ processes in the available HARQ process range) }+1, and N is a positive integer. The PDCP SN is a PDCP SN of a PDCP packet (for example, a PDCP data PDU) corresponding to the first MAC packet. PDCP SN_start is a sequence number of a PDCP packet corresponding to a 1^{st} MAC packet that corresponds to the first DRB or the first logical channel and that does not carry a logical channel identifier, or a sequence number of a PDCP packet corresponding to a 1^{st} MAC packet that corresponds to the first DRB or the first logical channel and that is generated based on the solution in this application. mod is a modulo operation. PDCP SN_start may be 0 by default, or may be notified by the network device to the terminal device (to be specific, for downlink data transmission, the terminal device is notified that a PDCP SN corresponding to a 1^{st} PDCP packet that does not carry a PDCP SN is PDCP SN_start, or the terminal device is notified that a PDCP SN corresponding to a 1^{st} MAC packet that is of the first DRB or the first logical channel and that is received from the available HARQ process range is PDCP SN_start; for uplink data transmission, the terminal device is notified that a PDCP SN corresponding to a 1^{st} PDCP packet that does not carry a PDCP SN is PDCP SN_start, or the terminal device is notified that a PDCP SN corresponding to a 1^{st} MAC packet that is of the first DRB or the first logical channel and that is sent from the available HARQ process range is PDCP SN_start). The foregoing formula for calculating N is applicable to a case in which each HARQ process in the available HARQ process range transmits only one data packet of the first DRB or the first logical channel.

Optionally, if each HARQ process in the available HARQ process range needs to be supported to transmit a plurality of data packets of the first DRB or the first logical channel, the formula for calculating N may be: N={(PDCP SN-PDCP SN_last) mod (a quantity of HARQ processes in the available HARQ process range) }+1, where N is a positive integer. The PDCP SN is a 1^{st} PDCP SN (namely, a smallest PDCP SN) in a plurality of downlink data packets that need to be sent this time. PDCP SN_last is a PDCP SN that has been sent in the foregoing polling manner, in other words, a last PDCP SN that is sent when a HARQ process is selected in the foregoing polling manner last time. An initial value of PDCP SN_last is PDCP SN_start. Each time after a HARQ process is selected in the foregoing polling manner, PDCP SN_last is updated to the last PDCP SN that is sent in the foregoing polling manner. For example, the available HARQ process range is a HARQ process 1 to a HARQ process 30. When a HARQ process is selected in the foregoing polling manner for a first time, if the HARQ process needs to send X1 downlink data packets of the first DRB or the first logical channel, N={ (a 1^{st} PDCP SN in the X1 downlink data packets-PDCP SN_last) mod (a quantity of HARQ processes in the available HARQ process range)}+1, and a network device side updates PDCP SN_last=PDCP SN_start+X1-1. Next time the network device needs to select a HARQ process to send X2 downlink data packets corresponding to the first DRB or the first logical channel, N={(a 1st PDCP SN PDCP SN in the X2 downlink data packets-PDCP SN_last) mod (a quantity of HARQ processes in the available HARQ process range) }+1. The network device side updates PDCP SN_last=PDCP SN_start+X1+X2-1.

Optionally, inside the network device, the CU sends PDCP SN_start to the DU. Optionally, an upper layer (for example, the RLC layer) of the MAC layer sends, to the MAC layer, a PDCP SN corresponding to each PDCP data PDU. In this way, the MAC layer may determine N based on the foregoing formula, in other words, the network device determines the first HARQ process. Optionally, if the upper layer of the MAC layer does not send, to the MAC layer, a PDCP SN corresponding to each PDCP data PDU, the MAC layer may determine, based on PDCP SN_start and a PDCP packet that corresponds to the first DRB or the first logical channel and that is received by the MAC layer for an X^{th} time, that is, the first MAC packet is a PDCP packet that corresponds to the first DRB or the first logical channel and that is received for an X^{th} time, a PDCP SN of the first PDCP packet corresponding to the first MAC packet (for example, PDCP SN of the first PDCP packet corresponding to the first MAC packet=PDCP SN_start+X-1), and further determine N.

Optionally, if the structure of the network device is shown in FIG. 2, to be specific, the network device uses the CU-DU split architecture, the CU-CP sends PDCP SN_start to the CU-UP. The CU-UP does not include the PDCP SN in the PDCP header starting from PDCP SN_start. Optionally, the CU-UP may send a value of PDCP SN_start to the CU-CP, and then the CU-CP sends PDCP SN_start to the DU.

It should be noted that, in this application, the foregoing method is used to determine the first HARQ process based on the PDCP SN for the PDCP data PDU.

The network device may schedule downlink data transmission through dynamic scheduling or preconfigured scheduling.

The dynamic scheduling means that the network device sends a scheduling resource to the terminal device by using downlink control information (downlink control information, DCI). The scheduling resource in the dynamic scheduling may be referred to as a dynamic scheduling resource. The dynamic scheduling further means that the network device sends the scheduling resource to the terminal device through a physical downlink control channel (physical downlink control channel, PDCCH) carried by the DCI. When scheduling the first MAC packet, the network device allocates the scheduling resource to transmit the first MAC packet, and allocates the first HARQ process to transmit the first MAC packet. Optionally, when the network device sends, to the terminal device, a PDCCH that carries the dynamic scheduling resource, one piece of indication information may be carried in the PDCCH. The indication information indicates that the dynamic scheduling resource is for the first DRB or the first logical channel. Optionally, the PDCCH may further carry one piece of indication information. The indication information indicates an ID of the first HARQ process, so that the terminal device can learn of the ID of the first HARQ process.

The preconfigured scheduling means that the network device sends a preconfigured scheduling resource to the terminal device by using an RRC message. The scheduling resource in the preconfigured scheduling may be referred to as a preconfigured scheduling resource. Preconfigured scheduling resources are classified into downlink preconfigured scheduling resources and uplink preconfigured scheduling resources. Subsequently, when sending downlink data to the terminal device, the network device may send the downlink data to the terminal device by using these downlink preconfigured scheduling resources, and does not need to send the PDCCH to the terminal device. Subsequently, when sending uplink data to the network device, the terminal device may send the uplink data to the network device by using these uplink preconfigured scheduling resources, and does not need to wait for the network device to send the PDCCH to the terminal device. When sending the preconfigured scheduling resource to the terminal device, the network device further indicates that the preconfigured scheduling resource is used to schedule the data packet corresponding to the first DRB or the first logical channel. When scheduling the first MAC packet, the network device allocates the preconfigured scheduling resource to transmit the first MAC packet, and allocates the first HARQ process to transmit the first MAC packet. In this application, for downlink data transmission, the preconfigured scheduling resource sent by the network device to the terminal device is referred to as a first preconfigured scheduling resource. The first preconfigured scheduling resource is used to schedule the downlink data packet of the first DRB or the first logical channel, so that the terminal device receives the downlink data packet on the first preconfigured scheduling resource. Optionally, the preconfigured scheduling resource is used to schedule only a MAC packet (namely, a MAC packet corresponding to a PDCP PDU having the PDCP SN) corresponding to a PDCP SDU corresponding to the first DRB or the first logical channel. Optionally, the network device further sends an available HARQ process range of the preconfigured scheduling resource to the terminal device. Optionally, the preconfigured scheduling resource may be sent to the terminal device in step 101 or 102.

For the MAC layer, the first MAC packet corresponding to the first DRB or the first logical channel is obtained. In other words, the MAC layer processes the first RLC packet corresponding to the first PDCP packet, to obtain the first MAC packet. Optionally, when the first MAC packet is generated, a header of the first MAC packet does not carry the logical channel identifier, or the first MAC packet does not carry the logical channel identifier, to reduce header overheads of the MAC packet.

Further, the first MAC packet may not carry L, and a size of a MAC SDU carried in the first MAC packet may be indicated in any one of the following manner 1 to manner 3.

Manner 1: If the dynamic scheduling is used, the size of the MAC SDU carried in the first MAC packet may be indicated by using the DCI. The DCI may include length indication information, indicating the size of the MAC SDU carried in the first MAC packet, so that when receiving the DCI, the terminal device can determine, based on the length indication information, the size of the MAC SDU carried in the first MAC packet. Optionally, to reduce overheads of occupying the DCI by the length indication information, the length indication information indicates an offset value of the size of the MAC SDU carried in the first MAC packet relative to a length threshold, so that the terminal device can determine, based on the offset value and the length threshold, the size of the MAC SDU carried in the first MAC packet. The length threshold may be predefined or preconfigured in the protocol, or may be notified by the network device to the terminal device. A specific value is not limited in this application. In the manner 1, the first MAC packet may carry a padding bit and a MAC subheader corresponding to the padding bit.

Manner 2: If the preconfigured scheduling is used, a size of the first MAC packet may be indicated by using the preconfigured scheduling resource. In the preconfigured scheduling, the network device may send a plurality of preconfigured scheduling resources to the terminal device. One preconfigured scheduling resource corresponds to one length value, and a maximum amount of information that can be carried in one preconfigured scheduling resource is the same as a length corresponding to the preconfigured scheduling resource. In this case, when sending the first MAC packet, the network device may select, from the plurality of preconfigured scheduling resources, a preconfigured scheduling resource that can carry a maximum amount of information that is the same as the size of the first MAC packet, where the preconfigured scheduling resource is used to schedule sending of the first MAC packet. In this case, the terminal device may learn of the size of the first MAC packet based on a preconfigured scheduling resource from which the first MAC packet is received. In the manner 2, the first MAC packet does not include a padding bit or a MAC subheader corresponding to the padding bit.

Manner 3: The first MAC packet carries relative length indication information, indicating an offset value of the size of the MAC SDU carried in the first MAC packet relative to a length threshold. Optionally, the length threshold may be predefined or preconfigured in the protocol, or may be notified by the network device to the terminal device. A specific value is not limited in this application. For example, the length threshold is 12 bytes. The length threshold in the manner 3 is the same as or different from the length threshold in the manner 1. The terminal device determines, based on the length threshold and the offset value carried in the first MAC packet, the size of the MAC SDU carried in the first MAC packet. The manner 3 is applicable to both the dynamic scheduling and the preconfigured scheduling. In the manner 3, the first MAC packet may carry a padding bit and a MAC subheader corresponding to the padding bit.

The foregoing manner 1 to manner 3 are used as examples, and another manner may be further used to indicate the size of the first MAC packet or the size of the MAC SDU carried in the first MAC packet.

Optionally, when a PDCP layer of a transmit end includes the data amount indication information in the header of the first PDCP packet, a MAC layer of the transmit end may not include L in the first MAC packet. For downlink data transmission, the transmit end is the network device. For uplink data transmission, the transmit end is the terminal device.

After obtaining the size of the MAC SDU carried in the first MAC packet, the terminal device may learn whether the first MAC packet carries a padding bit. The terminal device may discard the padding bit, or may not send the padding bit to the RLC layer.

105: The network device sends the first data packet to the terminal device through the first HARQ process. Correspondingly, the terminal device receives the first data packet from the terminal device through the first HARQ process.

When determining the first HARQ process and obtaining the first data packet, the network device sends the first data packet to the terminal device through the first HARQ process. Optionally, the first data packet is the first MAC packet.

106: The terminal device determines, based on the first HARQ process, a logical channel identifier corresponding to the first data packet.

The terminal device receives the first data packet through the first HARQ process, and learns, based on step 103, that the data packet transmitted through the first HARQ process is one of data packets of the first logical channel, to learn that the logical channel identifier corresponding to the first data packet is the identifier of the first logical channel.

Optionally, the first data packet is the first MAC packet.

When the terminal device receives, from HARQ processes corresponding to the available HARQ process range of the first logical channel, data packets from the network device, logical channels corresponding to the data packets received through these HARQ processes are all first logical channels. That is, logical channel identifiers corresponding to these data packets are identifiers of the first logical channels. Because the first MAC packet is sent through the first HARQ process, correspondingly, the terminal device receives the first MAC packet (which is actually a data packet that is sent to the MAC layer after being processed by the PHY layer) through the first HARQ process, and a logical channel identifier corresponding to the first MAC packet is the identifier of the first logical channel.

Optionally, the terminal device may determine the ID of the first HARQ process. For the dynamic scheduling, the terminal device may determine the ID of the first HARQ process based on indication information carried on the PDCCH. For the preconfigured scheduling, the terminal device may determine the ID of the first HARQ process with reference to a manner in 3GPP 38.321 based on at least two of a current slot number, a quantity of slots included in each frame (*numberOfSlotsPerFrame*)*,* a preconfigured scheduling periodicity (*periodicity*)*,* a quantity of available HARQ processes (*nrofHARQ-Processes*) for the preconfigured scheduling, and a HARQ process ID offset (*harq-ProcID-Offset*)*.* The current slot number is a number of a slot in which receiving of current downlink data transmission starts. The quantity of available HARQ processes for the preconfigured scheduling is the same as a quantity of HARQ processes in the available HARQ process range in this application.

For example, when no HARQ process ID offset is configured for the downlink preconfigured scheduling resource, the terminal device obtains the ID of the first HARQ process according to the following formula (1) (where for details, refer to the 3GPP 38.321 protocol): HARQ Process ID=[floor (CURRENT_slot × 10/(numberOfSlotsPerFrame × periodicity))] modulo nrofHARQ-Processes

CURRENT_slot=[(SFN×numberOfSlotsPerFrame)+slot number in the frame], floor represents rounding down, and modulo represents a modulo operation. The slot number in the frame is the number of the slot in which the current downlink transmission starts. The SFN is a current system frame number.

For another example, when a HARQ process ID offset is configured for the downlink preconfigured scheduling resource, the terminal device obtains the ID of the first HARQ process according to the following formula (2) (where for details, refer to the 3GPP 38.321 protocol): HARQ Process ID=[floor (CURRENT_slot × 10/(numberOfSlotsPerFrame × periodicity))] modulo nrofHARQ- Processes+harq-ProcID-Offset

CURRENT_slot=[(SFN×*numberOfSlotsPerFrame*)+slot number in the frame].

Optionally, the terminal device does not need to determine, based on the first HARQ process, the logical channel identifier corresponding to the first MAC packet, but obtains, based on the logical channel identifier carried in the first MAC packet, the logical channel identifier corresponding to the first MAC packet. The terminal device may perform the following content. Optionally, for the preconfigured scheduling, in the foregoing step 104, that the network device determines the first HARQ process from the available HARQ process range corresponding to the first DRB or the first logical channel in the polling manner may be specifically determining the first HARQ process according to the foregoing formula (1) or formula (2).

Because the first MAC packet sent by the network device may not carry L, the terminal device may determine, based on the foregoing manner 1 to manner 3, the size of the first MAC packet or the size of the MAC SDU carried in the first MAC packet.

The first MAC packet sent by the network device may be obtained by performing padding at the PDCP layer (in other words, the PDCP layer performs padding). In this case, when the terminal device processes the first MAC packet to obtain the first PDCP packet, and the first PDCP packet includes the data amount indication information, the terminal device obtains the data amount in the first PDCP packet based on the data amount indication information, further determines a padding bit, and discards the padding bit. That is, the data packet delivered by the PDCP layer to the SDAP layer does not carry the padding bit.

Optionally, when the first PDCP packet on the network device side does not carry a sequence number of the first PDCP packet, that is, does not carry a PDCP SN, the terminal device needs to determine the PDCP SN of the first PDCP packet when processing the first MAC packet. In an implementation, the terminal device determines the PDCP SN of the first PDCP packet based on the first HARQ process according to a mapping rule. Then, the MAC layer on a terminal device side sends a MAC SDU and the PDCP SN to the RLC layer, and the RLC layer sends an RLC SDU and the PDCP SN to the PDCP layer.

The mapping rule may include: PDCP SN of the first PDCP packet=initial PDCP SN+(sequence number of the first HARQ process in the available HARQ process range-1)*MAC packet that corresponds to the first DRB or the first logical channel and that is received from the first HARQ process for an M^{th} time. The initial PDCP SN may be represented as PDCP SN_start, is a sequence number of a PDCP packet corresponding to a 1^{st} MAC packet that corresponds to the first DRB or the first logical channel and that does not carry a logical channel identifier, or is a PDCP SN corresponding to a 1^{st} PDCP packet that corresponds to the first DRB or the first logical channel and that does not carry a PDCP packet sequence number, and M is a positive integer. The sequence number of the first HARQ process in the available HARQ process range is a specific HARQ process in which the first HARQ process is located in the available HARQ process range. The MAC packet that corresponds to the first DRB or the first logical channel and that is received from the first HARQ process for the M^{th} time may also be understood as a MAC packet that corresponds to the first DRB or the first logical channel, that does not carry the logical channel identifier, and that is received from the first HARQ process for the M^{th} time, or a MAC packet corresponding to a PDCP packet that corresponds to the first DRB or the first logical channel, that does not carry a PDCP SN, and that is received from the first HARQ process for the M^{th} time. For example, if PDCP SN_start is 1, the available HARQ process range is a HARQ process 1 to a HARQ process 30, the sequence number of the first HARQ process in the available HARQ process range is 11, and M is 2, the PDCP SN of the first PDCP packet is 21. PDCP SN_start may be 0 by default, or the network device may notify the terminal device (to be specific, notify the terminal device to start receiving the MAC packet from PDCP SN_start). The foregoing formula for calculating the PDCP SN of the first PDCP packet is applicable to a case in which each HARQ process in the available HARQ process range transmits one data packet of the first DRB or the first logical channel.

Optionally, if each HARQ process in the available HARQ process range needs to be supported to transmit a plurality of data packets of the first DRB or the first logical channel, the calculation formula may be: a PDCP SN of an X3^{th} PDCP packet in the plurality of data packets received in the first HARQ process=a last PDCP SN received in a previous HARQ process+X3. An initial value of the last PDCP SN received in the previous HARQ process is PDCP SN_start-1. Each time after a plurality of data packets are received from the HARQ process (for example, X4 data packets are carried in a HARQ process), the terminal device updates the last PDCP SN received in the previous HARQ process, to calculate a PDCP SN corresponding to a data packet received in a next HARQ process. The last PDCP SN received in the previous HARQ process=the last PDCP SN received in the previous HARQ process+X4. The previous HARQ process is a HARQ process before the first HARQ process in the available HARQ process range. The next HARQ process is a HARQ process after the first HARQ process in the available HARQ process range.

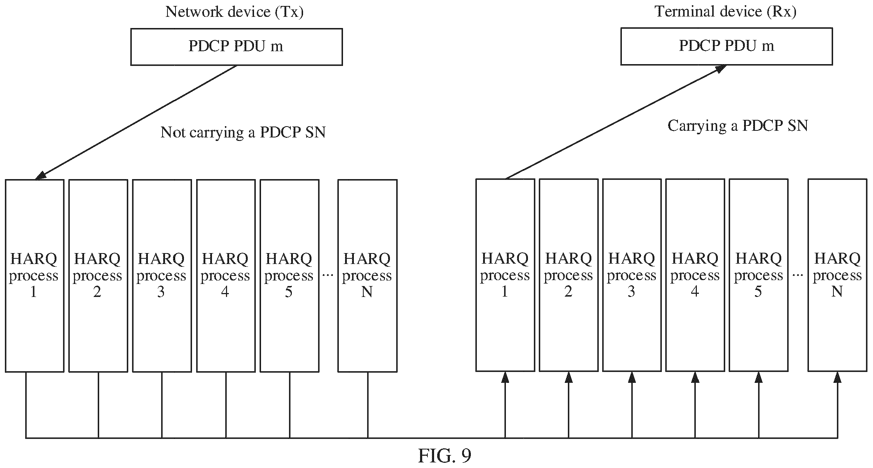

For example, refer to a diagram of an example of transmission shown in FIG. 9. When the network device generates a PDCP PDU m, a header of the PDCP PDU m does not carry a PDCP SN or the PDCP PDU m does not carry a header. After the PDCP PDU m is processed, the PDCP PDU m is finally sent to a terminal device through a HARQ process 1. The terminal device receives the PDCP PDU m through the HARQ process 1, and may determine the PDCP SN of the PDCP PDU m at the MAC layer based on the HARQ process 1 according to the mapping rule, and then send the PDCP SN of the PDCP PDU m to the PDCP layer.

It should be noted that, a solution in which the terminal device determines, based on the first HARQ process, the logical channel identifier corresponding to the first MAC packet and a solution in which the terminal device obtains the data amount in the first PDCP packet based on the data amount indication information included in the first PDCP packet may be independently implemented.

In Embodiment 1 shown in FIG. 7, the first MAC packet sent by the network device through the first HARQ process does not carry the logical channel identifier, and the terminal device may determine, based on the first HARQ process, the logical channel identifier corresponding to the first MAC packet, to reduce header overheads of the MAC packet. Further, the first PDCP packet on the network device side does not carry the PDCP SN, and the terminal device may determine the PDCP SN of the first PDCP packet based on the first HARQ process according to the mapping rule, to reduce header overheads of the PDCP packet.

Embodiment 2: In uplink data transmission, a terminal device sends data to a network device.

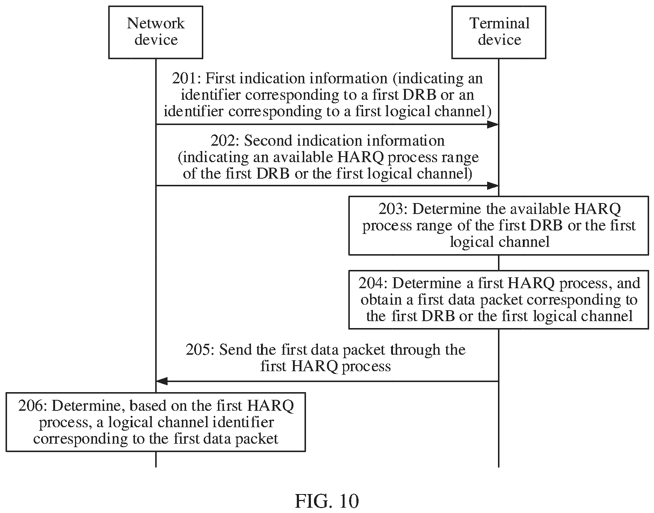

FIG. 10 is a schematic flowchart of a data packet processing method according to Embodiment 2 of this application. The method may include but is not limited to the following steps.

201: The network device sends first indication information to the terminal device. Correspondingly, the terminal device receives the first indication information from the network device. The first indication information indicates an identifier corresponding to a first DRB or an identifier corresponding to a first logical channel.

202: The network device sends second indication information to the terminal device. Correspondingly, the terminal device receives the second indication information from the network device. The second indication information indicates an available HARQ process range of the first DRB or the first logical channel.

203: The terminal device determines the available HARQ process range of the first DRB or the first logical channel.

For step 201 to step 203, refer to specific descriptions of step 101 to step 103. Details are not described herein again.

204: The terminal device determines a first HARQ process, and obtains a first data packet corresponding to the first DRB or the first logical channel.

The first HARQ process may be used to transmit the first data packet. The first data packet is any one of a plurality of data packets corresponding to the first DRB or the first logical channel.

Optionally, the first data packet is a first MAC packet, and the first MAC packet is any one of a plurality of MAC packets corresponding to the first DRB or the first logical channel. It is assumed that a data packet on which RTP/UDP/IP processing is performed is a first IP packet. The first IP packet is processed by an SDAP layer, a PDCP layer, an RLC layer, and a MAC layer in sequence, to obtain the first MAC packet, and the first MAC packet is finally sent through a PHY layer. It is assumed that the first IP packet is processed by the SDAP layer to obtain a first SDAP packet, the first SDAP packet is processed by the PDCP layer to obtain a first PDCP packet, and the first PDCP packet is processed by the RLC layer to obtain a first RLC packet. The first RLC packet is processed by the MAC layer to obtain the first MAC packet. If the first PDCP packet is a packet generated by the PDCP layer, that is, a PDCP control packet, the packet does not need to be processed by the SDAP layer. After the PDCP layer generates the first PDCP packet, the first PDCP packet is processed by the RLC layer to obtain the first RLC packet. The first RLC packet is processed by the MAC layer to obtain the first MAC packet.

It should be noted that, a sequence of determining the first HARQ process by the terminal device and obtaining the first data packet corresponding to the first DRB or the first logical channel is not limited in this application.

For the SDAP layer, the network device may not configure a downlink SDAP header for the first DRB or the first logical channel, so that the terminal device processes the first IP packet at the SDAP layer to obtain the first SDAP packet, where the first SDAP packet does not carry a SDAP header. It should be noted that, there may be no SDAP layer in some communication systems.

For the PDCP layer, the terminal device allocates, in a manner in 3GPP 38.323, a PDCP SN to a data packet (for example, the first SDAP packet) received from an upper layer, and performs operations such as header compression and encryption. For a process in which the terminal device generates the first PDCP packet at the PDCP layer, refer to specific descriptions of the first implementation and the second implementation in which the network device generates the first PDCP packet in step 104. Details are not described herein again. A difference lies in that step 104 is performed by the network device, and step 204 is performed by the terminal device.

For the RLC layer, the network device may configure a TM mode for the first DRB or the first logical channel. In this way, when the terminal device sends an uplink data packet, no RLC header is carried, to reduce header overheads of an RLC packet. When receiving the uplink data packet, the network device does not perform any processing at the RLC layer, to reduce operation steps. Optionally, if a PDCP layer of the terminal device further notifies a PDCP SN corresponding to the first PDCP packet when sending the first PDCP packet to the RLC layer, the RLC layer further notifies a PDCP SN corresponding to the first RLC packet when sending the first RLC packet to the MAC layer. Optionally, the RLC layer further notifies the MAC layer that the first PDCP packet is a PDCP data PDU or a PDCP control PDU, or notifies the MAC layer not to carry the logical channel identifier during processing.

For the MAC layer, the terminal device determines or learns of the first HARQ process.

For dynamic scheduling, the network device allocates the first HARQ process to the terminal device, and sends a scheduling resource to the terminal device through a PDCCH carried by DCI. The PDCCH may indicate an ID of the first HARQ process, so that the terminal device determines or learns of the ID of the first HARQ process. The network device may determine and allocate the first HARQ process in a polling manner. Refer to descriptions in step 104. However, in this embodiment, the network device determines and allocates, in the polling manner, a first HARQ process corresponding to uplink data transmission of the first DRB or the first logical channel.

For preconfigured scheduling, the network device sends a preconfigured scheduling resource to the terminal device, and further indicates that the preconfigured scheduling resource is used to schedule a MAC packet corresponding to the first DRB or the first logical channel. In this application, for the uplink data transmission, the preconfigured scheduling resource sent by the network device to the terminal device is referred to as a second preconfigured scheduling resource. The second preconfigured scheduling resource is used to schedule uplink data packet corresponding to the first DRB or the first logical channel, and may be understood as being used to schedule the terminal device to send the uplink data packet on the second preconfigured scheduling resource (all or a part of the resource). The terminal device may determine the first HARQ process from the available HARQ process in the polling manner. The process is similar to a process in which the network device determines the first HARQ process in the polling manner. For details, refer to the process in which the network device determines the first HARQ process in the polling manner in step 104. A difference lies in that in step 104, the network device determines the first HARQ process in the polling manner, and in step 204, the terminal device determines the first HARQ process in the polling manner, that is, the terminal device performs the step. Alternatively, the terminal device may determine the ID of the first HARQ process according to the following formula (3) or formula (4) based on at least two of a current symbol number, a quantity of slots included in each frame (*numberOfSlotsPerFrame*)*,* a quantity of symbols included in each slot (*numberOfSymbolsPerSlot*)*,* a preconfigured scheduling periodicity (*periodicity*)*,* a quantity of available HARQ processes (*nrofHARQ-Processes*) for the preconfigured scheduling, and a HARQ process ID offset (*harq-ProcID-Offset*)*.* For details, refer to the 3GPP 38.321 protocol.

For example, when no HARQ process ID offset is configured for the uplink preconfigured scheduling resource, the terminal device obtains the ID of the first HARQ process according to the following formula (3): HARQ Process ID=[floor(CURRENT_symbol/periodicity)] modulo nrofHARQ- Processes

CURRENT_symbol=(SFN×numberOfSlotsPerFrame×numberOfSymbolsPerSlot+slo t number in the frame×numberOfSymbolsPerSlot+symbol number in the slot), floor represents rounding down, and modulo represents a modulo operation. The slot number in the frame is a number of a slot in which current uplink transmission starts. The symbol number in the slot is a symbol number in number of the slot in which the current uplink transmission starts. The SFN is a current system frame number.

For another example, when a HARQ process ID offset is configured for the uplink preconfigured scheduling resource, the terminal device obtains the ID of the first HARQ process according to the following formula (4): HARQ Process ID=[floor(CURRENT_symbol/periodicity)] modulo nrofHARQ- Processes+harq-ProcID-Offset

For the MAC layer, the terminal device obtains the first MAC packet corresponding to the first DRB or the first logical channel. In other words, the MAC layer processes the first RLC packet corresponding to the first PDCP packet, to obtain the first MAC packet. Optionally, the first MAC packet may not carry the logical channel identifier. Further, the first MAC packet may not carry L, and a size of the first MAC packet or a size of a MAC SDU carried in the first MAC packet may be indicated in any one of the following manner 1 and manner 2.

Manner 1: If the preconfigured scheduling is used, the size of the first MAC packet may be indicated by using the preconfigured scheduling resource. In the preconfigured scheduling, the network device may send a plurality of preconfigured scheduling resources to the terminal device. One preconfigured scheduling resource corresponds to one length value, and a maximum amount of information that can be carried in one preconfigured scheduling resource is the same as a length corresponding to the preconfigured scheduling resource. In this case, when sending the first MAC packet, the terminal device may select, from the plurality of preconfigured scheduling resources, a preconfigured scheduling resource that can carry a maximum amount of information that is the same as the size of the first MAC packet, where the preconfigured scheduling resource is used to send the first MAC packet. In this case, the network device may learn of the size of the first MAC packet based on a preconfigured scheduling resource from which the first MAC packet is received. In the manner 1, the first MAC packet does not include a padding bit or a MAC subheader corresponding to the padding bit.

Manner 2: The first MAC packet carries relative length indication information, indicating an offset value of the size of the MAC SDU carried in the first MAC packet relative to a length threshold. Optionally, the length threshold may be predefined or preconfigured in the protocol, or may be notified by the network device to the terminal device. A specific value is not limited in this application. For example, the length threshold is 12 bytes. The network device determines, based on the length threshold and the offset value carried in the first MAC packet, the size of the MAC SDU carried in the first MAC packet. The manner 2 is applicable to both the dynamic scheduling and the preconfigured scheduling. In the manner 2, the first MAC packet may carry a padding bit and a MAC subheader corresponding to the padding bit.

The foregoing manner 1 and manner 2 are used as examples, and another manner may be further used to indicate the size of the first MAC packet or the size of the MAC SDU carried in the first MAC packet.

Optionally, when the PDCP layer of the terminal device includes data amount indication information in a header of the first PDCP packet, a MAC layer of the terminal device may not include L in the first MAC packet.

After obtaining the size of the MAC SDU carried in the first MAC packet, the network device may learn whether the first MAC packet carries a padding bit. The terminal device may discard the padding bit, or may not send the padding bit to the RLC layer.

205: The terminal device sends the first data packet to the network device through the first HARQ process.

When determining the first HARQ process and obtaining the first data packet, the terminal device sends the first data packet to the network device through the first HARQ process. Optionally, the first data packet is the first MAC packet.

206: The network device determines, based on the first HARQ process, a logical channel identifier corresponding to the first data packet.

Step 206 is similar to step 106. A difference lies in that step 106 is performed by the terminal device, and step 206 is performed by the network device. To be specific, the network device determines, by using a method similar to the method in step 106, the logical channel identifier, the size of the MAC SDU carried in the first MAC packet, and the PDCP SN of the first PDCP packet corresponding to the first MAC packet.

Details may be as follows.

The network device receives the first data packet through the first HARQ process, and learns, based on step 202, that the data packet transmitted through the first HARQ process is one of data packets of the first logical channel, to learn that the logical channel identifier corresponding to the first data packet is the identifier of the first logical channel.

Optionally, the first data packet is the first MAC packet.

When the network device receives, from HARQ processes corresponding to the available HARQ process range of the first logical channel, data packets from the terminal device, logical channels corresponding to the data packets received through these HARQ processes are all first logical channels. That is, logical channel identifiers corresponding to these data packets are identifiers of the first logical channels. Because the first MAC packet is sent through the first HARQ process, correspondingly, the network device receives the first MAC packet (which is actually a data packet that is sent to the MAC layer after being processed by the PHY layer) through the first HARQ process, and a logical channel identifier corresponding to the first MAC packet is the identifier of the first logical channel.

Optionally, the network device may determine the ID of the first HARQ process. For the dynamic scheduling, the network device may determine the ID of the first HARQ process based on indication information carried on the PDCCH for scheduling the first MAC packet. For the preconfigured scheduling, the network device may determine the ID of the first HARQ process according to the formula (3) or formula (4) in step 204.

Optionally, the network device does not need to determine, based on the first HARQ process, the logical channel identifier corresponding to the first MAC packet, but obtains, based on the logical channel identifier carried in the first MAC packet, the logical channel identifier corresponding to the first MAC packet. The network device may perform the following content.

Because the first MAC packet sent by the terminal device may not carry L, the network device may determine, based on the foregoing manner 1 to manner 3, the size of the first MAC packet or the size of the MAC SDU carried in the first MAC packet.

The first MAC packet sent by the terminal device may be obtained by performing padding at the PDCP layer (in other words, the PDCP layer performs padding). In this case, when the network device processes the first MAC packet to obtain the first PDCP packet, and the first PDCP packet includes the data amount indication information, the terminal device obtains the data amount in the first PDCP packet based on the data amount indication information, further determines a padding bit, and discards the padding bit. That is, the data packet delivered by the PDCP layer to the SDAP layer does not carry the padding bit.

Optionally, when a first PDCP packet on a terminal device side does not carry a sequence number of the first PDCP packet, that is, does not carry a PDCP SN, the network device needs to determine the PDCP SN of the first PDCP packet when processing the first MAC packet. In an implementation, the terminal device determines the PDCP SN of the first PDCP packet based on the first HARQ process according to a mapping rule. Then, the MAC layer on the terminal device side sends a MAC SDU and the PDCP SN to the RLC layer, and the RLC layer sends an RLC SDU and the PDCP SN to the PDCP layer. For the mapping rule, refer to descriptions in step 106.

Optionally, if a structure of the network device is shown in FIG. 2, to be specific, the network device uses a CU-DU split architecture, a DU of the network device determines the PDCP SN of the first PDCP packet corresponding to the first MAC packet. When sending the first PDCP packet to a CU of the network device, the DU of the network device further sends the PDCP SN of the first PDCP packet at the same time. For example, the first PDCP packet and the PDCP SN of the first PDCP packet are carried in an F1 interface-user plane.

It should be noted that, a solution in which the terminal device determines, based on the first HARQ process, the logical channel identifier corresponding to the first MAC packet and a solution in which the terminal device obtains the data amount in the first PDCP packet based on the data amount indication information included in the first PDCP packet may be independently implemented.

In Embodiment 2 shown in FIG. 10, the first MAC packet sent by the terminal device through the first HARQ process does not carry the logical channel identifier, and the network device may determine, based on the first HARQ process, the logical channel identifier corresponding to the first MAC packet, to reduce header overheads of the MAC packet. Further, the first PDCP packet on the terminal device side does not carry the PDCP SN, and the network device may determine the PDCP SN of the first PDCP packet based on the first HARQ process according to the mapping rule, to reduce header overheads of the PDCP packet.

It should be noted that, in embodiments shown in FIG. 7 and FIG. 10, the methods in which the first MAC packet does not carry the logical channel identifier, the first MAC packet does not carry L, the first PDCP packet does not carry the PDCP SN, and the first PDCP packet includes the data amount indication information may be independently implemented.

Embodiment 3: A first device sends data to a second device, where the first device is a transmit end, and the second device is a receive end.

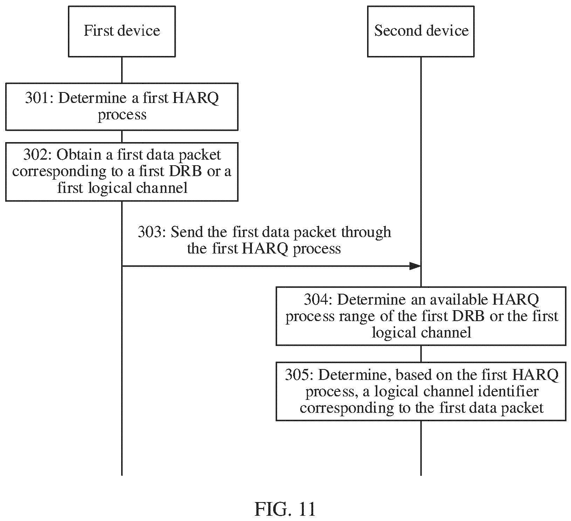

FIG. 11 is a schematic flowchart of a data packet processing method according to Embodiment 3 of this application. The method may include but is not limited to the following steps.

301: The first device determines a first HARQ process, where the first HARQ process belongs to an available HARQ process range of a first DRB or a first logical channel.

302: The first device obtains a first data packet corresponding to the first DRB or the first logical channel. The first data packet does not carry a logical channel identifier.

303: The first device sends the first data packet to the second device through the first HARQ process. Correspondingly, the second device receives the first data packet from the first device through the first HARQ process.

304: The second device determines the available HARQ process range of the first DRB or the first logical channel.

305: The second device determines, based on the first HARQ process, a logical channel identifier corresponding to the first data packet.

If the first device is a network device, and the second device is a terminal device, for Embodiment 3 shown in FIG. 10, refer to Embodiment 1. If the first device is a terminal device, and the second device is a network device, for Embodiment 3 shown in FIG. 10, refer to Embodiment 2.

In Embodiment 3 shown in FIG. 11, the first data packet sent by the transmit end through the first HARQ process does not carry the logical channel identifier, and the receive end may determine, based on the first HARQ process, the logical channel identifier corresponding to the first data packet, to reduce header overheads of the data packet. Optionally, the first data packet is a first MAC packet, and header overheads of the MAC packet can be reduced. Further, a first PDCP packet on a transmit end side does not carry a PDCP SN, and the receive end may determine the PDCP SN of the first PDCP packet based on the first HARQ process according to a mapping rule, to reduce header overheads of the PDCP packet.

To implement the data packet processing method provided in embodiments of this application, the first device and the second device may each include a hardware structure and a software module, and implement the foregoing functions in a form of the hardware structure, the software module, or a combination of the hardware structure and the software module. One of the foregoing functions may be performed in the form of the hardware structure, the software module, or the combination of the hardware structure and the software module.

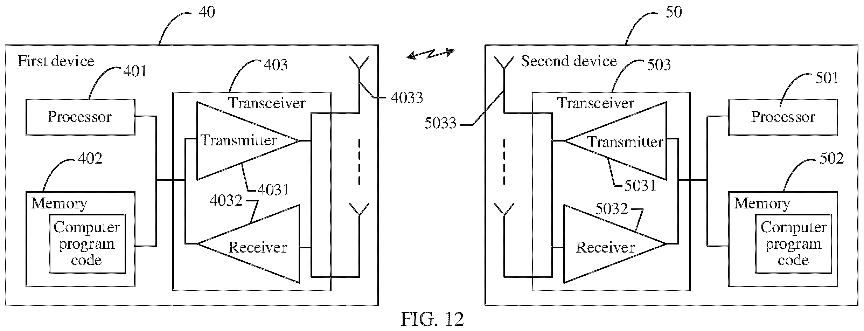

FIG. 12 shows a form of communication between a first device and a second device. As shown in FIG. 12, the first device 40 includes a processor 401, a memory 402, and a transceiver 403. The transceiver 403 includes a transmitter 4031, a receiver 4032, and an antenna 4033. The second device 50 includes a processor 501, a memory 502, and a transceiver 503. The transceiver 503 includes a transmitter 5031, a receiver 5032, and an antenna 5033. The receiver 4032 may be configured to receive a message through the antenna 4033. The transmitter 4031 may be configured to send data and/or signaling to the second device 50 through the antenna 4033. The transmitter 5031 may be configured to send a message to the first device 40 through the antenna 5033. The receiver 5032 may be configured to receive, through the antenna 5033, data and/or signaling sent by the first device 40.

For downlink data transmission, the first device is a network device, and the second device is a terminal device. For related operations performed by the network device and the terminal device, refer to specific descriptions in the embodiment shown in FIG. 7. For uplink data transmission, the first device is a terminal device, and the second device is a network device. For related operations performed by the terminal device and the network device, refer to specific descriptions in the embodiment shown in FIG. 10.

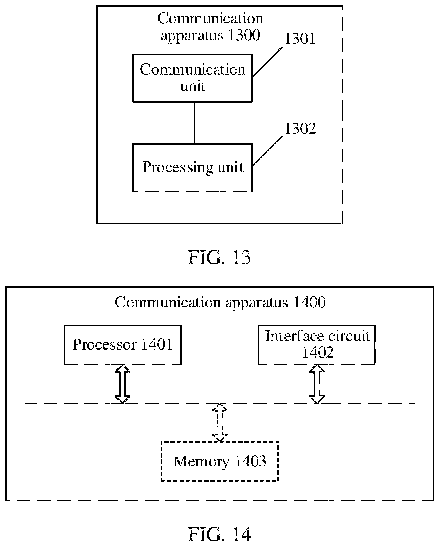

FIG. 13 and FIG. 14 are diagrams of structures of possible communication apparatuses according to embodiments of this application. These communication apparatuses may be configured to implement functions of the terminal device or the network device in the foregoing method embodiments. Therefore, beneficial effects of the foregoing method embodiments can also be implemented.

The communication apparatus 1300 shown in FIG. 13 may include a communication unit 1301 and a processing unit 1302. The communication unit 1301 may include a sending unit and/or a receiving unit. The sending unit is configured to implement a sending function. The receiving unit is configured to implement a receiving function. The communication unit 1301 may implement a sending function and/or a receiving function. The communication unit may also be described as a transceiver unit.

The communication apparatus 1300 may be a first device, may be an apparatus in the first device, or may be an apparatus having a function of the first device. The communication apparatus 1300 may be a second device, may be an apparatus in the second device, or may be an apparatus having a function of the second device.

If the communication apparatus 1300 is a network device in downlink data transmission, the communication apparatus 1300 may perform related operations of the network device in the embodiment shown in FIG. 7. For example, in the embodiment shown in FIG. 7, the communication unit 1301 is configured to perform step 101, step 102, and step 105, and the processing unit 1302 is configured to perform step 104.

If the communication apparatus 1300 is a terminal device in downlink data transmission, the communication apparatus 1300 may perform related operations of the terminal device in the embodiment shown in FIG. 7. For example, in the embodiment shown in FIG. 7, the communication unit 1301 is configured to perform step 101, step 102, and step 105, and the processing unit 1302 is configured to perform step 103 and step 106.

If the communication apparatus 1300 is a network device in uplink data transmission, the communication apparatus 1300 may perform related operations of the network device in the embodiment shown in FIG. 10. For example, in the embodiment shown in FIG. 10, the communication unit 1301 is configured to perform step 201, step 202, and step 205, and the processing unit 1302 is configured to perform step 206.

If the communication apparatus 1300 is a terminal device in uplink data transmission, the communication apparatus 1300 may perform related operations of the terminal device in the embodiment shown in FIG. 10. For example, in the embodiment shown in FIG. 10, the communication unit 1301 is configured to perform step 201, step 202, and step 205, and the processing unit 1302 is configured to perform step 203 and step 204.

The communication apparatus 1400 shown in FIG. 14 may include a processor 1401 and an interface circuit 1402. The processor 1401 and the interface circuit 1402 are coupled to each other. It may be understood that, the interface circuit 1402 may be an interface circuit or an input/output interface. Optionally, the communication apparatus 1400 may further include a memory 1403, configured to store instructions executed by the processor 1401, store input data required by the processor 1401 to run the instructions, or store data generated after the processor 1401 runs the instructions.

For example, the communication apparatus 1400 may be a network device in downlink data transmission. The interface circuit 1402 is configured to perform step 101, step 102, and step 105 in FIG. 7. The processor 1401 is configured to perform step 104 in FIG. 7.

For example, the communication apparatus 1400 may be a terminal device in downlink data transmission. The interface circuit 1402 is configured to perform step 101, step 102, and step 105 in FIG. 7. The processor 1401 is configured to perform step 103 and step 106 in FIG. 7.

For example, the communication apparatus 1400 may be a network device in uplink data transmission. The interface circuit 1402 is configured to perform step 201, step 202, and step 205 in FIG. 10. The processor 1401 is configured to perform step 206 in FIG. 10.

For example, the communication apparatus 1400 may be a terminal device in uplink data transmission. The interface circuit 1402 is configured to perform step 201, step 202, and step 205 in FIG. 10. The processor 1401 is configured to perform step 203 and step 204 in FIG. 10.

When the communication apparatus is a chip used in the terminal device, the chip of the terminal device implements functions of the terminal device in the foregoing method embodiments. The chip receives information from another module (for example, a radio frequency module or an antenna) in the terminal device, where the information is sent by the network device or a core network device to the terminal device. Alternatively, the chip sends information to another module (for example, a radio frequency module or an antenna) in the terminal device, where the information is sent by the terminal device to the network device or a core network device.

When the communication apparatus is a chip used in the network device, the chip of the network device implements functions of the network device in the foregoing method embodiments. The chip receives information from another module (for example, a radio frequency module or an antenna) in the network device, where the information is sent by the terminal device to the network device. Alternatively, the chip sends information to another module (for example, a radio frequency module or an antenna) in the network device, where the information is sent by the network device to the terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor. When sending information, a device (the terminal device or the network device) outputs the information through an interface circuit of a chip. When receiving information, the device inputs the information to the interface circuit of the chip.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disk read-only memory (compact disc read-only memory, CD-ROM), or any other form of storage medium well known in the art. For example, the storage medium is coupled to the processor, so that the processor can read information from the storage medium and write information into the storage medium. Certainly, the storage medium may be a component of the processor. The processor and the storage medium may be disposed in the ASIC. In addition, the ASIC may be located in the network device or the terminal device. Certainly, the processor and the storage medium may alternatively exist as discrete components in the network device or the terminal device.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A data packet processing method, applied to a second device, wherein the method comprises:
determining an available HARQ process range of a first DRB or a first logical channel;
receiving, from a first device through a first HARQ process, a first data packet corresponding to the first DRB or the first logical channel, wherein the first HARQ process belongs to the available HARQ process range; and
determining, based on the first HARQ process, a logical channel identifier corresponding to the first data packet.

2. The method according to claim 1, wherein the first data packet is a first MAC packet; and
the method further comprises:
determining a size of the first MAC packet based on downlink control information comprising length indication information; or
determining a size of the first MAC packet based on a maximum amount of information that can be carried in a preconfigured scheduling resource, wherein the maximum amount of information that can be carried in the preconfigured scheduling resource matches the size of the first MAC packet; or
determining a size of the first MAC packet based on relative length indication information comprised in the first MAC packet, wherein the relative length indication information indicates an offset value of the size of the first MAC packet relative to a length threshold.

3. The method according to claim 1, wherein the first data packet is a first MAC packet; and
the method further comprises:
processing the first MAC packet to obtain a first PDCP packet, wherein the first PDCP packet comprises data amount indication information; and
determining a data amount in the first PDCP packet based on the data amount indication information.

4. The method according to claim 3, wherein the method further comprises:
determining a padding bit in the first PDCP packet based on the data amount in the first PDCP packet.

5. The method according to claim 1, wherein a first PDCP packet corresponding to the first data packet does not comprise a sequence number of the first PDCP packet.

6. The method according to claim 1, wherein the method further comprises:
determining, based on the first HARQ process according to a mapping rule, a sequence number of a first PDCP packet corresponding to the first data packet, wherein
the mapping rule comprises: sequence number of the first PDCP packet=initial sequence number+(sequence number of the first HARQ process in the available HARQ process range of the first DRB or the first logical channel-1)*MAC packet that corresponds to the first DRB or the first logical channel and that is received from the first HARQ process for an M^{th} time, wherein the initial sequence number is a sequence number of a PDCP packet corresponding to a 1^{st} MAC packet that corresponds to the first DRB or the first logical channel and that does not carry a logical channel identifier, and M is a positive integer.

7. The method according to any one of claims 1 to 6, wherein the second device is a terminal device, and the first device is a network device; and
the method further comprises at least one of the following:
receiving first indication information from the network device, wherein the first indication information indicates an identifier corresponding to the first DRB or an identifier corresponding to the first logical channel; and
receiving second indication information from the network device, wherein the second indication information indicates the available HARQ process range of the first DRB or the first logical channel.

8. The method according to any one of claims 1 to 6, wherein the second device is a network device, and the first device is a terminal device; and
the method further comprises at least one of the following:
sending first indication information to the terminal device, wherein the first indication information indicates an identifier corresponding to the first DRB or an identifier corresponding to the first logical channel; and
sending second indication information to the terminal device, wherein the second indication information indicates the available HARQ process range of the first DRB or the first logical channel.

9. The method according to claim 7 or 8, wherein the first indication information further indicates that the MAC packet corresponding to the first DRB or the first logical channel does not carry a logical channel identifier.

10. A data packet processing method, applied to a first device, wherein the method comprises:
determining a first HARQ process, wherein the first HARQ process belongs to an available HARQ process range of a first DRB or a first logical channel;
obtaining a first data packet corresponding to the first DRB or the first logical channel, wherein the first data packet does not carry a logical channel identifier; and
sending the first data packet to a second device through the first HARQ process.

11. The method according to claim 10, wherein the first data packet is a first MAC packet, and a size of the first MAC packet is indicated by length indication information comprised in downlink control information; or a size of the first MAC packet is indicated by a preconfigured scheduling resource, and a maximum amount of information that can be carried in the preconfigured scheduling resource matches the size of the first MAC packet; or a size of the first MAC packet is indicated by relative length indication information comprised in the first MAC packet, and the relative length indication information indicates an offset value of the size of the first MAC packet relative to a length threshold.

12. The method according to claim 10, wherein a first PDCP packet corresponding to the first data packet comprises data amount indication information, and the data amount indication information indicates a data amount in the first PDCP packet.

13. The method according to claim 12, wherein if a maximum amount of information that can be carried in a scheduling resource corresponding to the first PDCP packet does not match a size of the first PDCP packet, the first PDCP packet further comprises a padding bit.

14. The method according to claim 10, wherein a first PDCP packet corresponding to the first data packet does not comprise a sequence number of the first PDCP packet.

15. The method according to claim 14, wherein the sequence number of the first PDCP packet is sent from a PDCP layer to a MAC layer.

16. The method according to any one of claims 10 to 15, wherein the determining a first HARQ process comprises:
determining, from the available HARQ process range in a polling manner, that the first HARQ process is idle.

17. The method according to claim 16, wherein the first device is a network device, and the second device is a terminal device; and the method further comprises:
sending a first preconfigured scheduling resource to the terminal device, wherein the first preconfigured scheduling resource is used to schedule downlink data corresponding to the first DRB or the first logical channel; and
the sending the first data packet to a second device through the first HARQ process comprises:
sending the first data packet to the terminal device based on the first preconfigured scheduling resource through the first HARQ process.

18. The method according to claim 17, wherein the method further comprises at least one of the following:
sending first indication information to the terminal device, wherein the first indication information indicates an identifier corresponding to the first DRB or an identifier corresponding to the first logical channel; and
sending second indication information to the terminal device, wherein the second indication information indicates the available HARQ process range of the first DRB or the first logical channel.

19. The method according to claim 16, wherein the first device is a terminal device, and the second device is a network device; and the method further comprises:
receiving a second preconfigured scheduling resource from the network device, wherein the second preconfigured scheduling resource is used to schedule uplink data corresponding to the first DRB or the first logical channel; and
the sending the first data packet to a second device through the first HARQ process comprises:
sending the first data packet to the network device based on the second preconfigured scheduling resource through the first HARQ process.

20. The method according to claim 19, wherein the method further comprises at least one of the following:
receiving first indication information from the network device, wherein the first indication information indicates an identifier corresponding to the first DRB or an identifier corresponding to the first logical channel; and
receiving second indication information from the network device, wherein the second indication information indicates the available HARQ process range of the first DRB or the first logical channel.

21. The method according to claim 18 or 20, wherein the first indication information further indicates that the MAC packet corresponding to the first DRB or the first logical channel does not carry a logical channel identifier.

22. A communication apparatus, comprising a module configured to perform the method according to any one of claims 1 to 9 or the method according to any one of claims 10 to 21.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 or the method according to any one of claims 10 to 21 by using a logic circuit or by executing code instructions.

24. A computer-readable storage medium, wherein the storage medium stores a computer program or instructions, and when the computer program or the instructions are executed by a communication apparatus, the method according to any one of claims 1 to 9 or the method according to any one of claims 10 to 21 is implemented.
